(19) Europäisches Patentamt
European Patent Office
Office européen des brevets

(11) EP 3 836 276 A1

(12) EUROPEAN PATENT APPLICATION
published in accordance with Art. 153(4) EPC

(43) Date of publication:
**16.06.2021 Bulletin 2021/24**

(21) Application number: **19859253.7**

(22) Date of filing: **13.09.2019**

(51) Int Cl.:
***H01M 10/0567*** *(2010.01)* ***H01M 2/16*** *(2006.01)*
***H01M 4/131*** *(2010.01)* ***H01M 4/36*** *(2006.01)*
***H01M 4/505*** *(2010.01)* ***H01M 4/525*** *(2010.01)*
***H01M 4/62*** *(2006.01)* ***H01M 10/052*** *(2010.01)*
***H01M 10/0569*** *(2010.01)*

(86) International application number:
**PCT/JP2019/036212**

(87) International publication number:
**WO 2020/054863 (19.03.2020 Gazette 2020/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **14.09.2018 JP 2018173039**
**14.09.2018 JP 2018173040**

(71) Applicant: **Asahi Kasei Kabushiki Kaisha**
**Tokyo 1000006 (JP)**

(72) Inventors:
- **MATSUOKA, Naoki**
**Tokyo 100-0006 (JP)**
- **KAMINE, Hirokazu**
**Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **NONAQUEOUS ELECTROLYTIC SOLUTION AND NONAQUEOUS SECONDARY BATTERY**

(57) Provided is a nonaqueous electrolytic solution containing a nonaqueous solvent, a lithium salt, and at least one compound selected from the group consisting of compounds represented by general formula (1): $R^1$-$(S)_n$-$R^2$, general formula (2): X-Si$(OR^3)_{(3-m)}R_m$, general formula (3), general formula (4), and general formula (18): X-Si$(OR^{3'}OR^3)_{(3-m)}R^4_m$.

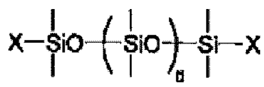

..... (3)

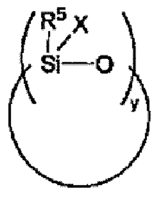

..... (4)

EP 3 836 276 A1

FIG. 1

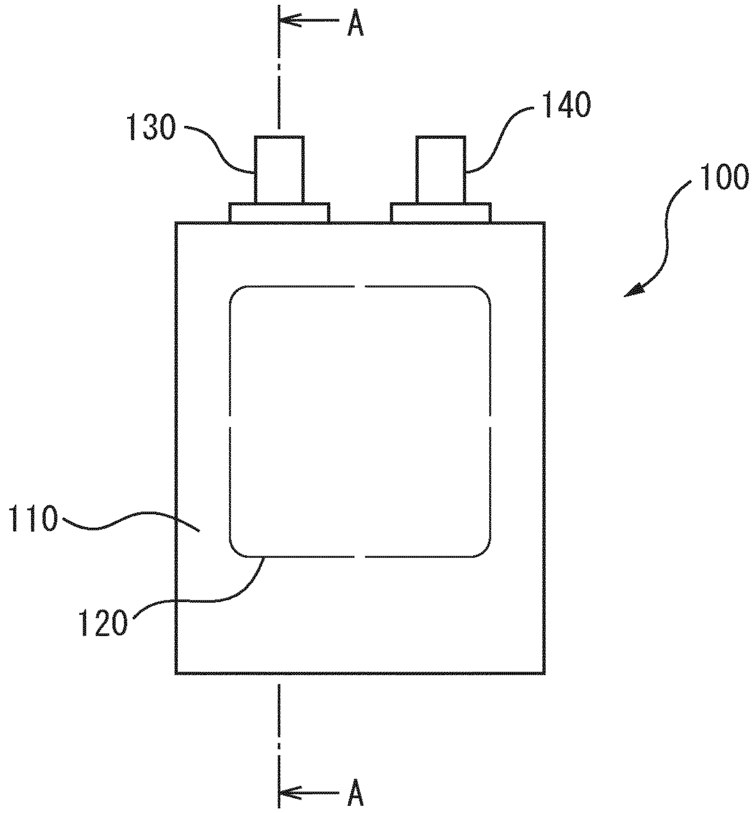

## Description

FIELD

The present invention relates to a nonaqueous electrolyte solution and a nonaqueous secondary battery.

BACKGROUND

A nonaqueous secondary battery including a lithium ion battery has advantageous features of light weight, high energy and long life, and is widely used as a power source for portable electronic devices. In recent years, applications of the nonaqueous secondary battery have been expanded to an industrial field typified by power tools such as electric tools, and in-vehicle use in electric vehicles and electric bicycles, and attention is also focused on the field of a power storage field such as a residential power storage system.

In a room temperature operation type lithium ion battery, it is desirable to use a nonaqueous electrolyte solution as the electrolyte solution from a practical point of view. For example, it is possible to exemplify, as a common solvent, a combination of a high-dielectric solvent such as cyclic carbonate ester and a low-viscosity solvent such as lower chain carbonate ester. In order to form a solid electrolyte interface (SEI) on a surface of a negative electrode to thereby inhibit the reductive decomposition of the nonaqueous solvent, it is desirable to add an electrode protection additive exemplified by an organic compound such as vinylene carbonate.

With the expansion of large-scale energy storage industry, especially in electric vehicles, there is a strong demand for higher energy density in nonaqueous secondary batteries, and research and development is also booming.

PTL 1 discloses a nonaqueous secondary battery which operates on a thick film electrode with a highly ionic conductive electrolyte solution. PTL 1 also reports a method for enhancing SEI by combining a plurality of electrode protection additives. Similarly, PTL 2 also reports that a specific organolithium salt enhances SEI and inhibits the decomposition of a highly ionic conductive electrolyte solution.

NPL 1 reports that the higher the Ni content, the higher the energy density of a layered rock salt type positive electrode active material.

However, in the nonaqueous secondary battery, while the energy density is improved, there remains a problem that long-term durability performance may be inferior. For example, NPL 2 refers to a peculiar deterioration factor, and mentions that the higher the Ni ratio, the lower the voltage and the more the deterioration progresses. NPL 3 reports a mechanism which induces the decomposition of a lithium salt triggered by the decomposition of a high-dielectric constant solvent.

The following background arts also exist for the nonaqueous secondary battery. Due to concerns about global warming and fossil fuel depletion, it is earnestly desired to apply the nonaqueous secondary battery to large-scale electricity storage industry centered on electric vehicles. However, the widespread use of electric vehicles may require the realization of higher output and higher energy density of the nonaqueous secondary battery. In order to realize these required performances, research and development to increase the energy density of each active material of a positive electrode and a negative electrode is carried out every day.

PTL 3 describes that it is preferable to combine a plurality of additives after defining an optimum LUMO energy range and a HOMO energy range of anions of an organolithium salt from the viewpoint of the durability of SEI on a surface of the negative electrode. PTL 4 also describes that it is preferable to combine a specific lithium salt with a plurality of additives from the viewpoint of the durability of SEI on a surface of the negative electrode.

PTL 5 reports that designing the porosity of composite particles constituting an electrode material within an optimum range enables inhibition of deterioration of the electrode caused by repeated expansion and contraction of a high-capacity negative electrode. PTL 6 reports that designing the thickness of a negative electrode active material to be twice or less the average particle size of negative electrode active material particles enables inhibition of an increase in resistance caused by repeated expansion and contraction of the negative electrode.

PTL 7 mentions that the addition of additives enables inhibition of deterioration of battery performance caused by repeated expansion and contraction of a high-capacity negative electrode.

[CITATION LIST]

[PATENT LITERATURE]

[PTL 1] WO 2013/062056
[PTL 2] WO 2012/057311

[PTL 3] WO 2012/057311
[PTL 4] WO 2013/062056
[PTL 5] JP 2003-303588 A
[PTL 6] JP 2004-146104 A
[PTL 7] WO 2017/077986

[NON-PATENT LITERATURE]

[NPL 1] ACS Energy Lett., 2, 196-223(2017).
[NPL 2] J. Power Sources, 233, 121-130(2013).
[NPL 3] J. Phys. Chem. Lett., 8, 4820-4825(2017).

SUMMARY

[TECHNICAL PROBLEM]

However, these nonaqueous secondary batteries aiming at higher energy density may be inferior in long-term durability performance compared to existing nonaqueous secondary batteries and have not reached the level of commercial products, so they have not been put into practical use. Both the electrolyte solution and the electrodes are required to have durability in a harsher environment.

The layered rock salt type positive electrode active material essentially has active sites which cause oxidative deterioration of the electrolyte solution. This active site may unintentionally consume the compound added to protect the negative electrode on the positive electrode side. The decomposition products of these additives taken in and deposited on the positive electrode side are likely to cause an increase in internal resistance of the nonaqueous secondary battery, and may also accelerate deterioration of the lithium salt. Further, unintended consumption of these additives easily leads to insufficient protection of the negative electrode surface.

These phenomena supported by the results of the dismantling analysis are problems newly discovered by the present inventors, and are not mentioned at all in PTLs 1 to 3 and NPLs 1 to 3.

The following problems also exist for the nonaqueous secondary battery.

If a film of a negative electrode cannot sufficiently withstand the solubility of a nonaqueous electrolyte solution, it may dissolve during various tests in a high-temperature environment. In this case, reductive decomposition of the nonaqueous electrolyte solution proceeds from the dissolved portion, thus causing gas generation or capacity reduction.

Here, PTL 3 and PTL 4 focus on the formation of a protective film having solubility resistance in a nonaqueous electrolyte solution (formation of a protective film on a negative electrode). That is, the inventions mentioned in PTL 3 and PTL 4 can operate as the nonaqueous electrolyte solution if the reductive decomposition of the nonaqueous electrolyte solution at the negative electrode can be solved.

However, when the negative electrodes described in PTL 5 and PTL 6 are used, the active material itself expands and contracts significantly with the charging/discharging cycle. Therefore, as the charging/discharging cycle is repeated, defects are generated in the protective film formed at the initial stage, and reductive decomposition of the nonaqueous electrolyte solution occurs from the defects, leading to deterioration of the battery performance.

Therefore, when the electrolyte solutions mentioned in PTL 3 and PTL 4 are used for a negative electrode material which causes large expansion and contraction, the protective film of the negative electrode is required to be excellent not only in solubility resistance but also in physical strength.

Meanwhile, when the additive described in PTL 7 is used, the durability against expansion and contraction of the negative electrode tends to be improved, but the solubility resistance in the electrolyte solution tends to be insufficient.

The present invention has been made in view of the above problems. First, an object of the present invention is to provide a nonaqueous electrolyte solution capable of exhibiting excellent load characteristics and inhibiting various deterioration phenomena when high-temperature storage or charging/discharging cycle is repeated by inhibiting the active site (active site of a positive electrode active material) which causes oxidative deterioration of the nonaqueous electrolyte solution, and a nonaqueous secondary battery.

Second, an object of the present invention is to provide a nonaqueous electrolyte solution capable of exhibiting excellent output performance and inhibiting various deteriorations during charging/discharging cycle in a low-temperature and high-temperature environment, by being provided with a film on a surface of a positive electrode active material, the film being excellent not only in solubility resistance in a nonaqueous electrolyte solution but also in physical strength.

[SOLUTION TO PROBLEM]

The present inventors have intensively studied to solve the above problems. As a result, they have found that the above problems can be solved by using a nonaqueous electrolyte solution or a nonaqueous secondary battery having the following configuration. Namely, examples of the embodiment for carrying out the present invention are as follows.

[1] A nonaqueous electrolyte solution comprising a nonaqueous solvent, a lithium salt, and at least one compound selected from the group consisting of compounds represented by the following general formula (1):

$$R^1\text{-}(S)_n\text{-}R^2 \qquad (1)$$

wherein $R^1$ and $R^2$ represent an alkyl group which may be substituted with an aryl group or an alkoxysilyl group, or an aryl group which may be substituted with an alkyl group or an alkoxysilyl group, and n is an integer of 1 to 4; the following general formula (2):

$$X\text{-}Si(OR^3)_{(3-m)}\,R^4_m \qquad (2)$$

wherein $R^3$ and $R^4$ represent an alkyl group which may be substituted with an aryl group or an alkoxysilyl group or a halogen atom, or an aryl group which may be substituted with an alkyl group or an alkoxysilyl group or a halogen atom, and X represents at least one selected from the group consisting of groups represented by the following formula (5):

[Chemical Formula 1]

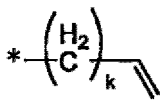
..... (5)

wherein k is an integer of 0 to 8 and * represents a binding site to Si,
the following formula (6):

[Chemical Formula 2]

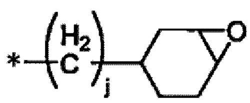
..... (6)

wherein j is an integer of 0 to 8 and * represents a binding site to Si,
the following formula (7):

[Chemical Formula 3]

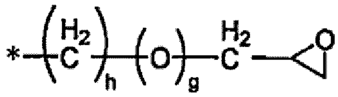
..... (7)

wherein h is an integer of 0 to 8, g is an integer of 0 or 1, and * represents a binding site to Si, and
the following formula (17)

[Chemical Formula 4]

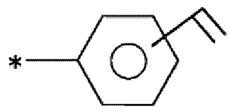

· · · · · (17)

wherein * represents a binding site to Si, and m is an integer of 0 to 2;
the following general formula (3):

[Chemical Formula 5]

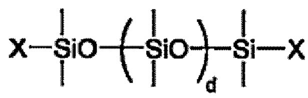

· · · · · (3)

wherein X each independently represents at least one selected from groups represented by the formulas (5) to (7) and (17) and d is an integer of 0 to 10,000;
the following general formula (4):

[Chemical Formula 6]

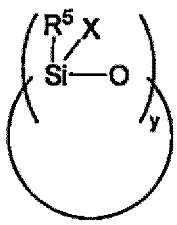

· · · · · (4)

wherein $R^5$ each independently represents an alkyl group which may be substituted with an aryl group or a halogen atom, or an aryl group may be substituted with an alkyl group or a halogen atom, y is an integer of 2 to 8, and X represents at least one selected from groups represented by the formulas (5) to (7) and (17); and
the following general formula (18):

$$X\text{-}Si(OR^{3'}OR^{3})_{(3-m)}R^{4}_{m} \qquad (18)$$

wherein $R^3$ , $R^4$ , X and m are as defined in the general formula (2), and $R^{3'}$ is an alkylene group which may be substituted with an aryl group, an alkoxysilyl group or a halogen atom.

[2] The nonaqueous electrolyte solution according to [1], wherein the content of at least one compound selected from the group consisting of compounds represented by the general formula (1) to (4) and (18) is 0.01 to 10 parts by weight as the amount per 100 parts by weight of the nonaqueous electrolyte solution.

[3] The nonaqueous electrolyte solution according to [1] or [2], wherein the nonaqueous electrolyte solution contains an acid anhydride.

[4] The nonaqueous electrolyte solution according to [3], wherein the acid anhydride contains at least one cyclic acid anhydride.

[5] The nonaqueous electrolyte solution according to [4], wherein the cyclic acid anhydride is at least one selected from the group consisting of malonic anhydride, succinic anhydride, glutaric anhydride, maleic anhydride, phthalic anhydride, 1,2-cyclohexanedicarboxylic anhydride, 2,3-naphthalenedicarboxylic anhydride and naphthalene-1,4,5,8-tetracarboxylic dianhydride.

[6] The nonaqueous electrolyte solution according to any one of [3] to [5], wherein the content of the acid anhydride

is 0.01 to 10 parts by weight as the amount per 100 parts by weight of the nonaqueous electrolyte solution.
[7] The nonaqueous electrolyte solution according to any one of [1] to [6], wherein the nonaqueous solvent contains 5 to 95% by volume of acetonitrile as the amount per total amount of the nonaqueous solvent.
[8] The nonaqueous electrolyte solution according to any one of [1] to [7], wherein the nonaqueous solvent contains a cyclic carbonate.
[9] The nonaqueous electrolyte solution according to [8], wherein the cyclic carbonate contains vinylene carbonate and/or fluoroethylene carbonate.
[10] A nonaqueous secondary battery comprising a positive electrode having a positive electrode active material layer on one or both sides of a current collector, a negative electrode having a negative electrode active material layer on one or both sides of a current collector, a separator and a nonaqueous electrolyte solution, wherein
the nonaqueous electrolyte solution is the nonaqueous electrolyte solution according to any one of [1] to [9], and
the negative electrode contains at least one compound selected from the group consisting of compounds represented by the following general formula (4A):

[Chemical Formula 7]

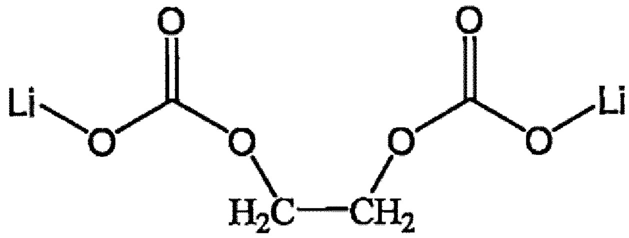

(4 A)

the following general formula (5A):

[Chemical Formula 8]

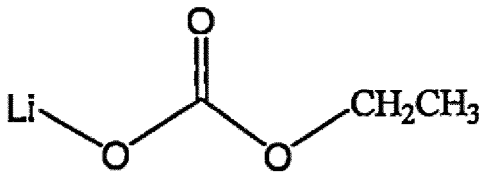

(5 A)

and
the following general formula (6A):

[Chemical Formula 9]

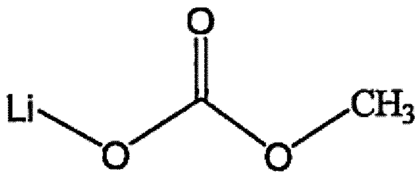

(6 A)

[11] The nonaqueous secondary battery according to [10], wherein the content of at least one compound selected from the group consisting of compounds represented by the general formulas (4A) to (6A) is 0.01 to 100 mg per 1 g of the negative electrode active material.

[12] The nonaqueous secondary battery according to [10] or [11], wherein at least one compound selected from the group consisting of compounds represented by the general formulas (4A) to (6A) is contained in both the positive electrode and the negative electrode, and the amount of the compound contained in the positive electrode is less than that amount of the compound contained in the negative electrode.

[13] A nonaqueous secondary battery comprising a positive electrode having a positive electrode active material layer on one or both sides of a current collector, a negative electrode having a negative electrode active material layer on one or both sides of a current collector, a separator and a nonaqueous electrolyte solution, wherein

a decomposition product of an acid anhydride is contained in both the positive electrode and the negative electrode, and the amount of the decomposition product per unit area of the acid anhydride contained in the positive electrode is less than the amount of the decomposition product per unit area of the acid anhydride contained in the negative electrode.

[14] The nonaqueous secondary battery according to [13], wherein the decomposition product of the acid anhydride contains at least one compound selected from the group consisting of compounds represented by the following general formula (8):

[Chemical Formula 10]

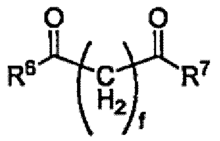

· · · · · (8)

wherein $R^6$ and $R^7$ represent an alkoxy group which may be substituted with a halogen atom, an OH group or an OLi group and f is an integer of 1 to 3;

the following general formula (9):

[Chemical Formula 11]

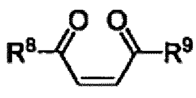

· · · · · (9)

wherein $R^8$ and $R^9$ represent an alkoxy group which may be substituted with a halogen atom, an OH group or an OLi group;

the following general formula (10):

[Chemical Formula 12]

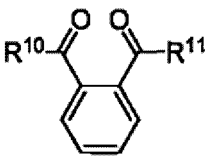

· · · · · (10)

wherein $R^{10}$ and $R^{11}$ represent an alkoxy group which may be substituted with a halogen atom, an OH group or an OLi group;

the following general formula (11):

[Chemical Formula 13]

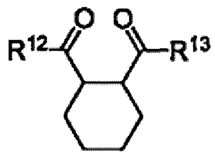

· · · · · (11)

wherein $R^{12}$ and $R^{13}$ represent an alkoxy group which may be substituted with a halogen atom, an OH group or an OLi group;
the following general formula (12):

[Chemical Formula 14]

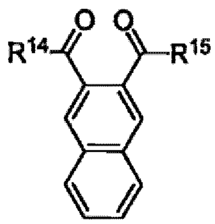

· · · · · (12)

wherein $R^{14}$ and $R^{15}$ represent an alkoxy group which may be substituted with a halogen atom, an OH group or an OLi group; and
the following general formula (13):

[Chemical Formula 15]

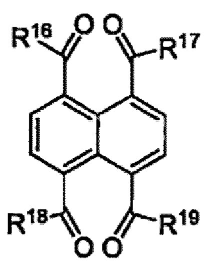

· · · · · (13)

wherein $R^{16}$ to $R^{19}$ represent an alkoxy group which may be substituted with a halogen atom, an OH group or an OLi group.
[15] The nonaqueous secondary battery according to any one of [13] or [14], wherein the positive electrode active material layer contains a positive electrode active material containing at least one transition metal element selected from the group consisting of nickel (Ni), manganese (Mn) and cobalt (Co).
[16] The nonaqueous secondary battery according to [15], wherein the positive electrode active material contains at least one selected from the group consisting of a lithium-containing metal oxide represented by the following general formula (14):

$$LipNiqCo_rMn_s\ MtO_u \qquad (14)$$

wherein M is at least one metal selected from the group consisting of aluminum (Al), tin (Sn), indium (In), iron (Fe), vanadium (V), copper (Cu), magnesium (Mg), titanium (Ti), zinc (Zn), molybdenum (Mo), zirconium (Zr), strontium (Sr) and barium (Ba), and p, q, r, s, t and u are within the following ranges: $0 < p < 1.3$, $0 < q < 1.2$, $0 < r < 1.2$, $0 \leq s < 0.5$, $0 \leq t < 0.3$, $0.7 \leq q + r + s + t \leq 1.2$ and $1.8 < u < 2.2$, and p is the value determined by a charge-discharge

state of the battery.

[17] The nonaqueous secondary battery according to [16], wherein a nickel (Ni) content ratio q of the lithium-containing metal oxide represented by the general formula (14) satisfies $0.5 < q < 1.2$.

[18] The nonaqueous secondary battery according to any one of [15] to [17], wherein a surface of the positive electrode active material is coated with a compound containing at least one metal element selected from the group consisting of zirconium (Zr), titanium (Ti), aluminum (Al) and niobium (Nb).

[19] The nonaqueous secondary battery according to any one of [10] to [18], wherein at least one battery member selected from the group consisting of the positive electrode, the negative electrode and the separator contains at least one compound selected from the group consisting of compounds represented by the following general formula (1):

$$R^1\text{-}(S)_n\text{-}R^2 \qquad (1)$$

wherein $R^1$ and $R^2$ represent an alkyl group which may be substituted with an aryl group or an alkoxysilyl group, or aryl group which may be substituted with an alkyl group or an alkoxysilyl group, and n is an integer of 1 to 4;
the following general formula (2):

$$X\text{-}Si(OR^3)(3 - m)\ R^4\ m \qquad (2)$$

wherein $R^3$ and $R^4$ represent an alkyl group which may be substituted with an aryl group or an alkoxysilyl group or a halogen atom, or an aryl group which may be substituted with an alkyl group or an alkoxysilyl group or a halogen atom, and X represents at least one selected from the group consisting of groups represented by the following formula (5):

[Chemical Formula 16]

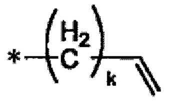
..... (5)

wherein k is an integer of 0 to 8 and * represents a binding site to Si,
the following formula (6):

[Chemical Formula 17]

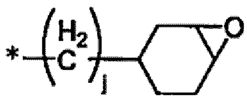
..... (6)

wherein j is an integer of 0 to 8 and * represents a binding site to Si,
the following formula (7):

[Chemical Formula 18]

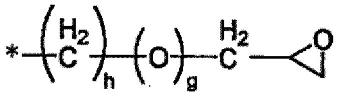
..... (7)

wherein h is an integer of 0 to 8, g is an integer of 0 or 1, and * represents a binding site to Si, and
the following formula (17)

[Chemical Formula 19]

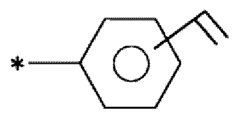

· · · · · (17)

wherein * represents a binding site to Si, and m is an integer of 0 to 2;
the following general formula (3):

[Chemical Formula 20]

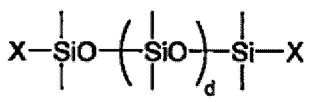

· · · · · (3)

wherein X each independently represents at least one selected from groups represented by the formulas (5) to (7) and (17) and d is an integer of 0 to 10,000;
the following general formula (4):

[Chemical Formula 21]

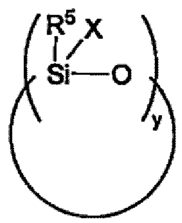

· · · · · (4)

wherein $R^5$ each independently represents an alkyl group which may be substituted with an aryl group or a halogen atom, or an aryl group which may be substituted with an alkyl group or a halogen atom, y is an integer of 2 to 8, and X represents at least one selected from groups represented by the formulas (5) to (7) and (17); and
the following general formula (18):

$$X\text{-}Si(OR^{3\prime}OR^{3})_{(3-m)}R^{4}_{m} \qquad (18)$$

wherein $R^3$ , $R^4$ , X, and m are as defined in the general formula (2), and $R^{3\prime}$ is an alkylene group which may be substituted with an aryl group, an alkoxysilyl group or a halogen atom.

[ADVANTAGEOUS EFFECTS OF INVENTION]

According to the present invention, first, it is possible to provide a nonaqueous electrolyte solution capable of exhibiting excellent load characteristics and inhibiting various deterioration phenomena when high-temperature storage or charging/discharging cycle is repeated by inhibiting the active site (active site of the positive electrode active material) which causes oxidative deterioration of the nonaqueous electrolyte solution, and a nonaqueous secondary battery.

According to the present invention, second, it is possible to provide a nonaqueous electrolyte solution capable of exhibiting excellent output performance and inhibiting various deteriorations during charging/discharging cycle in a low-temperature and high-temperature environment, by being provided with a film on a surface of a positive electrode active material, the film being excellent not only in solubility resistance in a nonaqueous electrolyte solution but also in physical strength.

BRIEF DESCRIPTION OF DRAWINGS

FIG. 1 is a plan view schematically showing an example of a nonaqueous secondary battery according to the present embodiment.

FIG. 2 is a cross-sectional view taken along line A-A of the nonaqueous secondary battery of FIG. 1.

DESCRIPTION OF EMBODIMENTS

Embodiments for carrying out the present invention (hereinafter simply referred to as "present embodiment") will be described in detail below. The present invention is not limited to the following embodiments, and various modifications can be made without departing from the scope of the present invention. The numerical range mentioned using "...-..." or "...to..." in the present description includes the numerical values mentioned before and after the numerical range.

<First Embodiment>

<<Nonaqueous Electrolyte Solution>>

The "nonaqueous electrolyte solution" in the present embodiment refers to an electrolyte solution in which the content of water is 1% by weight or less based on the total amount of the nonaqueous electrolyte solution. The nonaqueous electrolyte solution in the present embodiment preferably contains as little moisture as possible, but may contain a very small amount of moisture as long as it does not interfere the solution of the problems of the present invention. The moisture content is 300 weight ppm or less, and preferably 200 weight ppm or less, as the amount per total amount of the nonaqueous electrolyte solution. As long as the nonaqueous electrolyte solution has the configuration for achieving the solution of the problems of the present invention, it is possible to apply, as other structural elements, constituent materials in a known nonaqueous electrolyte solution used for a lithium ion battery by appropriately selecting them.

The nonaqueous electrolyte solution according to the present embodiment comprises a nonaqueous solvent, a lithium salt, and at least one compound selected from the group consisting of compounds represented by the following general formula (1):

$$R^1\text{-}(S)_n\text{-}R^2 \qquad (1)$$

wherein $R^1$ and $R^2$ represent an alkyl group which may be substituted with an aryl group or an alkoxysilyl group, or an aryl group which may be substituted with an alkyl group or an alkoxysilyl group, and n is an integer of 1 to 4;
the following general formula (2):

$$X\text{-}Si(OR^3)_{(3-m)}\, R^4{}_m \qquad (2)$$

wherein $R^3$ and $R^4$ represent an alkyl group which may be substituted with an aryl group or an alkoxysilyl group or a halogen atom, or an aryl group which may be substituted with an alkyl group or an alkoxysilyl group or a halogen atom, and X represents at least one selected from the group consisting of groups represented by the following formula (5):

[Chemical Formula 22]

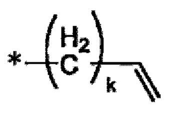 . . . . . (5)

wherein k is an integer of 0 to 8 and * represents a binding site to Si,
the following formula (6):

[Chemical Formula 23]

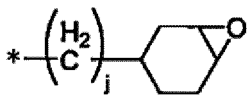

..... (6)

wherein j is an integer of 0 to 8 and * represents a binding site to Si, the following formula (7):

[Chemical Formula 24]

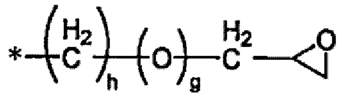

..... (7)

wherein h is an integer of 0 to 8, g is an integer of 0 or 1, and * represents a binding site to Si, and the following formula (17)

[Chemical Formula 25]

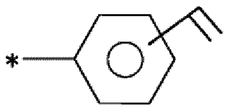

..... (17)

wherein * represents a binding site to Si, and m is an integer of 0 to 2; the following general formula (3):

[Chemical Formula 26]

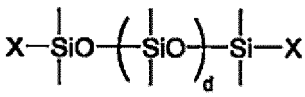

..... (3)

wherein X each independently represents at least one selected from groups represented by the formulas (5) to (7) and (17) and d is an integer of 0 to 10,000; the following general formula (4):

[Chemical Formula 27]

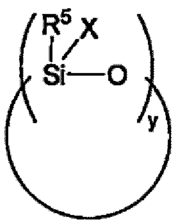

..... (4)

wherein $R^5$ each independently represents an alkyl group which may be substituted with an aryl group or a halogen atom, or an aryl group may be substituted with an alkyl group or a halogen atom, y is an integer of 2 to 8, and X represents

at least one selected from groups represented by the formulas (5) to (7) and (17); and the following general formula (18):

$$X\text{-}Si(OR^{3,}OR^{3})_{(3-m)}R^{4}{}_{m} \qquad (18)$$

wherein $R^3$ , $R^4$ , X and m are as defined in the general formula (2), and $R^{3,}$ is an alkylene group which may be substituted with an aryl group, an alkoxysilyl group or a halogen atom.

The compounds represented by the general formulas (1) to (4) and (18) have the effect of inhibiting the active site (active site of the positive electrode active material) which causes oxidative deterioration of the nonaqueous electrolyte solution. Therefore, by using such a compound, it is possible to provide a nonaqueous electrolyte solution capable of exhibiting excellent load characteristics and inhibiting various deterioration phenomena when high-temperature storage or charging/discharging cycle is repeated, and a nonaqueous secondary battery.

Specific examples of the compounds represented by the general formulas (1) to (4) and (18) include di-tert-butyl disulfide, bis[3-(triethoxysilyl)propyl]tetrasulfide, allyl sulfide, amyl methyl sulfide, amyl sulfide, allyl propyl sulfide, allyl methyl sulfide, allyl methyl disulfide, allyl propyl disulfide, benzyl phenyl sulfide, dibenzyl disulfide, benzyl sulfide, butyl methyl sulfide, butyl sulfide, tert-butyl disulfide, benzyl methyl sulfide, tert-butyl methyl sulfide, 4-tert-butyl diphenyl sulfide, bis(trimethylsilylmethyl)sulfide, cyclopropyl phenyl sulfide, diallyl disulfide, diamyl disulfide, dibutyl disulfide, di-tert-dodecyl disulfide, diethyl disulfide, diisobutyl disulfide, dimethyl disulfide, di-tert-octyl disulfide, di(α-phenylethyl) sulfide, dipropyl disulfide, didecyl disulfide, dodecyl sulfide, dibutyl disulfide, dicyclohexyl disulfide, decyl methyl sulfide, diisopropyl disulfide, dimethyl trisulfide, dodecyl methyl sulfide, diisopropyl trisulfide, ethylene sulfide, ethyl methyl sulfide, ethyl sulfide, ethyl propyl sulfide, ethyl isopropyl sulfide, ethyl vinyl sulfide, ethyl phenyl sulfide, heptyl sulfide, hexyl sulfide, hexadecyl sulfide, heptyl methyl sulfide, diisoamyl disulfide, isobutyl sulfide, isopropyl sulfide, isobutylene sulfide, isopropyl methyl sulfide, methyl n-octyl sulfide, methyl sulfide, methyl propyl disulfide, methyl propyl sulfide, nonyl sulfide, octadecyl sulfide, pentamethylene sulfide, diphenyl disulfide, phenyl sulfide, propylene sulfide, propyl sulfide, isopropyl propyl sulfide, phenyl vinyl sulfide, phenyl p-tolyl sulfide, thioanisole, trimethylene sulfide, tetradecyl sulfide, di-p-tolyl disulfide, tris(ethylthio)methane, triethoxyvinylsilane, allyltriethoxysilane, triethoxy(3-glycidyloxypropyl)silane, 2,4,6,8-tetramethyl-2,4,6,8-tetravinylcyclotetrasiloxane, allyltris(trimethylsilyloxy)silane, 1,3-divinyltetramethyldisiloxane, 1,1,1,3,5,5,5-heptamethyl-3-(3-glycidyloxypropyl)trisiloxane, 2,4,6-trimethyl-2,4,6-trivinylcyclotrisiloxane, allyltrimethoxysilane, 2-(3,4-epoxycyclohexyl)ethyltrimethoxysilane, 3-glycidyloxypropyltrimethoxysilane, [8-(glycidyloxy)-n-octyl]trimethoxysilane, trimethoxy(4-vinylphenyl)silane, trimethoxy(7-octen-1-yl)silane, vinyltrimethoxysilane, vinyltris(2-methoxyethoxy)silane, diethoxymethylvinylsilane, diethoxy(3-glycidyloxypropyl)methylsilane, dimethoxymethylvinylsilane, 3-glycidyloxypropyl(dimethoxy)methylsilane, vinyl group-terminated dimethylpolysiloxane, allyl group-terminated dimethylpolysiloxane, epoxy group-terminated dimethylpolysiloxane, glycidyl group-terminated dimethylpolysiloxane, cycloepoxy group-terminated dimethylpolysiloxane, alkylcycloepoxy group-terminated dimethylpolysiloxane and the like. These compounds are used alone, or in combination of two or more thereof.

The content of the compounds represented by the general formulas (1) to (4) and (18) is calculated by the weight percentage based on the total weight of all the components constituting the nonaqueous electrolyte solution. The content of at least one compound selected from the group consisting of the compounds represented by the general formulas (1) to (4) and (18) is preferably 0.01% by weight or more and 10% by weight or less, more preferably 0.05% by weight or more and 1% by weight or less, and still more preferably 0.1% by weight or more and 0.5% by weight or less, as the amount per total amount of the nonaqueous electrolyte solution (i.e., 100 parts by weight of the nonaqueous electrolyte solution). When the content is within this range, it is possible to effectively inhibit the active site of a positive electrode active material which causes oxidative deterioration of the nonaqueous electrolyte solution while maintaining the internal resistance of the nonaqueous secondary battery in a low state.

The compounds represented by the general formulas (1) to (4) and (18) are preferably contained in the nonaqueous electrolyte solution. Meanwhile, as long as the compounds represented by the general formulas (1) to (4) and (18) can act in a nonaqueous secondary battery, at least one battery member selected from the group consisting of a positive electrode, a negative electrode and a separator may contain those compounds. As a method of containing these compounds in the battery member, for example, the compounds may be contained in the battery member during fabrication of the battery member, or the battery member may be impregnated with the compounds by post-treatment typified by coating, dipping or spray drying to be applied to the battery member.

The nonaqueous electrolyte solution according to the present embodiment may include, in addition to a nonaqueous solvent, the compounds represented by the general formulas (1) to (4) and (18), an acid anhydride, an electrode protection additive and other optional additives.

The nonaqueous electrolyte solution according to the present embodiment can be produced by mixing a nonaqueous solvent and various additives by any means. Here, various additives include the compounds represented by the general formulas (1) to (4) and (18). In the present embodiment, various additives refer to a general term for the compounds represented by the general formulas (1) to (4) and (18), and an acid anhydride, an electrode protection

additive and other optional additives contained as necessary.

<Nonaqueous Solvent>

The "nonaqueous solvent" in the present embodiment means an element in which the lithium salt and various additives are removed from the nonaqueous electrolyte solution. When an electrode protection additive is contained in the nonaqueous electrolyte solution, "nonaqueous solvent" means an element in which the lithium salt and additives other than the electrode protection additive are removed from the nonaqueous electrolyte solution. Examples of the nonaqueous solvent include alcohols such as methanol and ethanol; aprotic solvents and the like. Of these, the nonaqueous solvent is preferably an aprotic solvent. The nonaqueous solvent may contain a solvent other than the aprotic solvent as long as it does not interfere the solution of the problems of the present invention.

For example, the nonaqueous solvent can contain acetonitrile as the aprotic solvent. Since the nonaqueous solvent contains acetonitrile, the ionic conductivity of the nonaqueous electrolyte solution is improved, thus making it possible to enhance the diffusivity of lithium ions in the battery. Therefore, when the nonaqueous electrolyte solution contains acetonitrile, in a positive electrode in which the positive electrode active material layer is thickened to increase the filling amount of the positive electrode active material, it becomes possible for lithium ions to satisfactorily reach the region in the vicinity of the current collector where lithium ions hardly reach during high-load discharging. Therefore, it becomes possible to draw out a sufficient capacity even during high-load discharging, thus making it possible to obtain a nonaqueous secondary battery having excellent load characteristics.

When the nonaqueous solvent contains acetonitrile, it is possible to enhance quick charging characteristics of the nonaqueous secondary battery. In constant current (CC)-constant voltage (CV) charging of a nonaqueous secondary battery, the capacity per unit time during the CC charging period is larger than the charging capacity per unit time during the CV charging period. When acetonitrile is used as the nonaqueous solvent of the nonaqueous electrolyte solution, the area capable of CC charging can be increased (CC charging time can be extended) and the charging current can also be increased. Therefore, it is possible to significantly reduce the time required to fully charge the battery from the start of charging the nonaqueous secondary battery.

Acetonitrile easily undergoes electrochemical reductive decomposition. Therefore, when acetonitrile is used, it is preferable to use acetonitrile as a nonaqueous solvent in combination with other solvents (for example, aprotic solvents other than acetonitrile) and/or to add an electrode protection additive for forming a protective film on the electrode.

The content of acetonitrile is preferably 5 to 95% by volume as the amount per total amount of the nonaqueous solvent. The content of acetonitrile is more preferably 20% by volume or more or 30% by volume or more, and still more preferably 40% by volume or more, as the amount per total amount of the nonaqueous solvent. This value is yet more preferably 85% by volume or less, and further preferably 66% by volume or less. When the content of acetonitrile is 5% by volume or more per total amount of the nonaqueous solvent, the ionic conductivity tends to increase, thus making it possible to exhibit high output characteristics, and also the dissolution of the lithium salt can be promoted. Since the below-mentioned additives inhibit an increase in internal resistance of the battery, when the content of acetonitrile in the nonaqueous solvent is within the above range, there is a tendency that high-temperature cycle characteristics and other battery characteristics can be further improved while maintaining excellent performance of acetonitrile.

Examples of the aprotic solvent other than acetonitrile include cyclic carbonate, fluoroethylene carbonate, lactone, organic compound containing a sulfur atom other than those from the general formula (1), chain fluorinated carbonate, cyclic ether, mononitrile other than acetonitrile, alkoxy group-substituted nitrile, dinitrile, cyclic nitrile, short-chain fatty acid ester, chain ether, fluorinated ether, ketone and a compound in which H atoms of the aprotic solvent are partially or entirely substituted with a halogen atom.

Examples of the cyclic carbonate include ethylene carbonate, propylene carbonate, 1,2-butylene carbonate, trans-2,3-butylene carbonate, cis-2,3-butylene carbonate, 1,2-pentylene carbonate, trans-2,3-pentylene carbonate, cis-2,3-pentylene carbonate, vinylene carbonate, 4,5-dimethylvinylene carbonate and vinylethylene carbonate;
examples of the fluoroethylene carbonate include 4-fluoro-1,3-dioxolan-2-one, 4,4-difluoro-1,3-dioxolan-2-one, cis-4,5-difluoro-1,3-dioxolan-2-one, trans-4,5-difluoro-1,3-dioxolan-2-one, 4,4,5-trifluoro-1,3-dioxolan-2-one, 4,4,5,5-tetrafluoro-1,3-dioxolan-2-one and 4,4,5-trifluoro-5-methyl-1,3-dioxolan-2-one;
examples of the lactone include γ-butyrolactone, α-methyl-γ-butyrolactone, γ-valerolactone, γ-caprolactone, δ-valerolactone, δ-caprolactone and ε-caprolactone;
examples of the organic compound containing a sulfur atom other than those from the general formula (1) include ethylene sulfite, propylene sulfite, butylene sulfite, pentene sulfite, sulfolane, 3-sulfolene, 3-methyl sulfolane, 1,3-propane sultone, 1,4-butane sultone, 1-propene-1,3-sultone, dimethyl sulfoxide, tetramethylene sulfoxide and ethylene glycol sulfite;
examples of the chain carbonate include ethyl methyl carbonate, dimethyl carbonate, diethyl carbonate, methyl propyl carbonate, methyl isopropyl carbonate, dipropyl carbonate, methyl butyl carbonate, dibutyl carbonate and ethyl propyl carbonate;

examples of the cyclic ether include tetrahydrofuran, 2-methyltetrahydrofuran, 1,4-dioxane and 1,3-dioxane;
examples of the mononitrile other than acetonitrile include propionitrile, butyronitrile, valeronitrile, benzonitrile and acrylonitrile;
examples of the alkoxy group-substituted nitrile include methoxyacetonitrile and 3-methoxypropionitrile;
examples of the dinitrile include malononitrile, succinonitrile, glutaronitrile, adiponitrile, 1,4-dicyanoheptane, 1,5-dicyanopentane, 1,6-dicyanohexane, 1,7-dicyanoheptane, 2,6-dicyanoheptane, 1,8-dicyanooctane, 2,7-dicyanooctane, 1,9-dicyanononane, 2,8-dicyanononane, 1,10-dicyanodecane, 1,6-dicyanodecane and 2,4-dimethylglutaronitrile;
examples of the cyclic nitrile include benzonitrile;
examples of the short-chain fatty acid ester include methyl acetate, methyl propionate, methyl isobutyrate, methyl butyrate, methyl isovalerate, methyl valerate, methyl pivalate, methyl hydroangelate, methyl caproate, ethyl acetate, ethyl propionate, ethyl isobutyrate, ethyl butyrate, ethyl isovalerate, ethyl valerate, ethyl pivalate, ethyl hydroangelate, ethyl caproate, propyl acetate, propyl propionate, propyl isobutyrate, propyl butyrate, propyl isovalerate, propyl valerate, propyl pivalate, propyl hydroangelate, propyl caproate, isopropyl acetate, isopropyl propionate, isopropyl isobutyrate, isopropyl butyrate, isopropyl isovalerate, isopropyl valerate, isopropyl pivalate, isopropyl hydroangelate, isopropyl caproate, butyl acetate, butyl propionate, butyl isobutyrate, butyl butyrate, butyl isovalerate, butyl valerate, butyl pivalate, butyl hydroangelate, butyl caproate, isobutyl acetate, isobutyl propionate, isobutyl isobutyrate, isobutyl butyrate, isobutyl isovalerate, isobutyl valerate, isobutyl pivalate, isobutyl hydroangelate, isobutyl caproate, tert-butyl acetate, tert-butyl propionate, tert-butyl isobutyrate, tert-butyl butyrate, tert-butyl isovalerate, tert-butyl valerate, tert-butyl pivalate, tert-butyl hydroangelate and tert-butyl caproate;
examples of the chain ether include dimethoxyethane, diethyl ether , 1,3-dioxolane, diglyme, triglyme and tetraglyme;
examples of the fluorinated ether include $Rf^{20}$-$OR^{21}$ (wherein $Rf^{20}$ is an alkyl group containing a fluorine atom, $R^{21}$ is an organic group which may contain a fluorine atom);
examples of the ketone include acetone, methyl ethyl ketone and methyl isobutyl ketone; and
examples of the compound in which H atoms of the aprotic solvent are partially or entirely substituted with a halogen atom include a compound in which a halogen atom is fluorine.

Here, examples of the fluorinated product of the chain carbonate include methyl trifluoroethyl carbonate, trifluorodimethyl carbonate, trifluorodiethyl carbonate, trifluoroethyl methyl carbonate, methyl 2,2-difluoroethyl carbonate, methyl 2,2,2-trifluoroethyl carbonate and methyl 2,2,3,3-tetrafluoropropyl carbonate. The fluorinated chain carbonate can be represented by the following general formula:

$$R^{29}\text{-O-C(O)O-}R^{30}$$

wherein $R^{29}$ and $R^{30}$ are at least one selected from the group consisting of $CH_3$, $CH_2\,CH_3$, $CH_2\,CH_2\,CH_3$, $CH(CH_3)_2$ and $CH_2Rf^{31}$, $Rf^{31}$ is an alkyl group having 1 to 3 carbon atoms in which a hydrogen atom is substituted with at least one fluorine atom, and $R^{29}$ and/or $R^{30}$ contain at least one fluorine atom.

Examples of the fluorinated product of the short-chain fatty acid ester include fluorinated short-chain fatty acid esters typified by 2,2-difluoroethyl acetate, 2,2,2-trifluoroethyl acetate and 2,2,3,3-tetrafluoropropyl acetate. The fluorinated short-chain fatty acid ester can be represented by the following general formula:

$$R^{32}\text{-C(O)O-}R^{33}$$

wherein $R^{32}$ is at least one selected from the group consisting of $CH_3$, $CH_2\,CH_3$, $CH_2\,CH_2\,CH_3$, $CH(CH_3)_2$, $CF_3\,CF_2\,H$, $CFH_2$, $CF_2\,Rf^{34}$, $CFHRf^{34}$ and $CH_2\,Rf^{35}$, $R^{33}$ is at least one selected from the group consisting of $CH_3$, $CH_2\,CH_3$, $CH_2\,CH_2\,CH_3$, $CH(CH_3)_2$ and $CH_2\,Rf^{35}$, $Rf^{34}$ is an alkyl group having 1 to 3 carbon atoms in which a hydrogen atom may be substituted with at least one fluorine atom, $Rf^{35}$ is an alkyl group having 1 to 3 carbon atoms in which a hydrogen atom is substituted with at least one fluorine atom, and $R^{32}$ and/or $R^{33}$ contain at least one fluorine atom, and when $R^{32}$ is $CF_2\,H$, $R^{33}$ is not $CH_3$.

The aprotic solvent other than acetonitrile in the present embodiment can be used alone, or two or more thereof may be used in combination.

It is preferable to use, as the nonaqueous solvent in the present embodiment, one or more of cyclic carbonate and chain carbonate in combination with acetonitrile from the viewpoint of improving the stability of the nonaqueous electrolyte solution. From this point of view, it is more preferable to use, as the nonaqueous solvent in the present embodiment, cyclic carbonate in combination with acetonitrile, and still more preferable to use both cyclic carbonate and chain carbonate in combination with acetonitrile.

When the cyclic carbonate is used together with acetonitrile, it is particularly preferable that the cyclic carbonate includes ethylene carbonate, vinylene carbonate and/or fluoroethylene carbonate.

<Lithium Salt>

The nonaqueous electrolyte solution according to the present embodiment contains a lithium salt.

The lithium salt in the present embodiment is preferably an imide salt represented by $LiN(SO_2C_mF_{2m+1})_2$ wherein m is an integer of 0 to 8.

The lithium salt in the present embodiment may further contain one or more selected from a fluorine-containing inorganic lithium salt, an organolithium salt and other lithium salts, together with an imide salt.

(Imide Salt)

Specifically, it is preferable to contain, as the imide salt, at least one of $LiN(SO_2F)_2$ and $LiN(SO_2CF_3)_2$.

When acetonitrile is contained in the nonaqueous solvent, the saturation concentration of the imide salt based on acetonitrile is higher than the saturation concentration of $LiPF_6$. Therefore, it is preferable to contain the imide salt at a molar concentration satisfying $LiPF_6 \leq$ imide salt at a low temperature because the association and precipitation of the lithium salt and acetonitrile at a low temperature can be inhibited. Further, the content of the imide salt is preferably 0.5 mol or more and 3.0 mol or less as the amount per 1 L of the nonaqueous solvent, from the viewpoint of ensuring the amount of ions supplied to the nonaqueous electrolyte solution according to the present embodiment.

According to an acetonitrile-containing nonaqueous electrolyte solution containing at least one of $LiN(SO_2F)_2$ and $LiN(SO_2CF_3)_2$, it is possible to effectively inhibit deterioration of ionic conductivity in a low-temperature range such as -10°C or -30°C, thus obtaining excellent low-temperature characteristics.

By limiting the content in this way, it also becomes possible to more effectively inhibit an increase in resistance during high-temperature heating.

(Fluorine-Containing Inorganic Lithium Salt)

The lithium salt in the present embodiment may contain a fluorine-containing inorganic lithium salt. Here, the "fluorine-containing inorganic lithium salt" refers to a lithium salt which does not contain a carbon atom in anions but contains a fluorine atom in anions and is soluble in acetonitrile. The fluorine-containing inorganic lithium salt is excellent in that it forms a passivation film on a surface of a positive electrode current collector and inhibits corrosion of the positive electrode current collector.

Examples of the fluorine-containing inorganic lithium salt include $LiPF_6$, $LiBF_4$, $LiAsF_6$, $Li_2SiF_6$, $LiSbF_6$, $Li_2B_{12}F_bH_{12-b}$ {wherein b is an integer of 0 to 3}, and one or more selected from these salts can be used.

As the fluorine-containing inorganic lithium salt, a compound which is a double salt of LiF and Lewis acid is desirable, and of these, a fluorine-containing inorganic lithium salt containing a phosphorus atom is more preferable because it facilitates the release of free fluorine atoms. A typical fluorine-containing inorganic lithium salt is $LiPF_6$, which dissolves and releases $PF_6$ anions. When a fluorine-containing inorganic lithium salt containing a boron atom is used as the fluorine-containing inorganic lithium salt, it is preferable because it is easy to capture an excess free acid component that may cause deterioration of the battery, and from such a point of view, $LiBF_4$ is preferable.

The content of the fluorine-containing inorganic lithium salt in the nonaqueous electrolyte solution according to the present embodiment is preferably 0.01 mol or more, more preferably 0.1 mol or more, and still more preferably 0.25 mol or more, as the amount per 1 L of the nonaqueous solvent. When the content of the fluorine-containing inorganic lithium salt is within the above range, the ionic conductivity tends to increase and high output characteristics tend to be exhibited. The amount per 1 L of the nonaqueous solvent is preferably 2.8 mol or less, more preferably 1.5 mol or less, and still more preferably 1.0 mol or less. When the content of the fluorine-containing inorganic lithium salt is within the above range, the ionic conductivity tends to increase and high output characteristics can be exhibited, and deterioration of the ionic conductivity due to an increase in viscosity at a low temperature tends to be inhibited. Moreover, the high-temperature cycle characteristics and other battery characteristics tend to be further improved while maintaining excellent performance of the nonaqueous electrolyte solution.

The content of the fluorine-containing inorganic lithium salt in the nonaqueous electrolyte solution according to the present embodiment may be, for example, 0.05 mol or more and 1.0 mol or less as the amount per 1 L of the nonaqueous solvent.

(Organolithium Salt)

The lithium salt in the present embodiment may contain an organolithium salt. The "organolithium salt" refers to a lithium salt other than an imide salt, which contains a carbon atom as anions and is soluble in acetonitrile.

Examples of the organolithium salt include an organolithium salt having an oxalic acid group. Specific examples of the organolithium salt having an oxalic acid group include organolithium salts represented by $LiB(C_2O_4)_2$, $LiBF_2$

$(C_2O_4)$, $LiPF_4$ $(C_2O_4)$ and $LiPF_2$ $(C_2O_4)_2$, respectively. Of these, at least one lithium salt selected from the lithium salts represented by $LiB(C_2O_4)_2$ and $LiBF_2$ $(C_2O_4)$ is preferable. It is more preferable to use one or more of these salts together with a fluorine-containing inorganic lithium salt. The organolithium salt having an oxalic acid group may be added to the nonaqueous electrolyte solution or contained in a negative electrode (negative electrode active material layer).

The amount of the organolithium salt added to the nonaqueous electrolyte solution in the present embodiment is preferably 0.005 mol or more, more preferably 0.01 mol or more, still more preferably 0.02 mol or more, and particularly preferably 0.05 mol or more, as the amount per 1 L of the nonaqueous solvent, from the viewpoint of ensuring better effects due to its use. However, if the amount of the organolithium salt having an oxalic acid group in the nonaqueous electrolyte solution is too large, it may precipitate. Therefore, the amount of the organolithium salt having an oxalic acid group added to the nonaqueous electrolyte solution is preferably less than 1.0 mol, more preferably less than 0.5 mol, and still more preferably less than 0.2 mol, as the amount per 1 L of the nonaqueous solvent.

The organolithium salt having an oxalic acid group is known to be hardly soluble in organic solvents having low polarity, especially chain carbonates. The content of the organolithium salt in the nonaqueous electrolyte solution according to the present embodiment may be, for example, 0.01 mol or more and 0.5 mol or less as the amount per 1 L of the nonaqueous solvent.

The organolithium salt having an oxalic acid group sometimes contains a trace amount of lithium oxalate, and sometimes reacts with a trace amount of water contained in other raw materials when mixed as a nonaqueous electrolyte solution, thus generating a new white precipitate of lithium oxalate. Therefore, the content of lithium oxalate in the nonaqueous electrolyte solution according to the present embodiment is preferably inhibited within a range of 500 ppm or less.

(Other Lithium Salts)

The lithium salt in the present embodiment may contain other lithium salts, in addition to the above lithium salts.

Specific examples of other lithium salts include:

inorganic lithium salts containing no fluorine atom in anions, such as $LiC10_4$, $LiAlO_4$, $LiAlCl_4$, $LiB_{10}Cl_{10}$ and chloroborane Li;
organolithium salts such as $LiCF_3SO_3$, $LiCF_3CO_2$, $Li_2C_2F_4$ $(SO_3)_2$, $LiC(CF_3SO_2)_3$, $LiC_nF_{(2n+1)}SO_3$ (wherein $n \geq 2$), lower aliphatic carboxylic acid Li, tetraphenylboric acid Li and $LiB(C_3O_4H_2)_2$;
organolithium salts represented by $LiPF_n(CpF_{2p+1)6-n}$ [wherein n is an integer of 1 to 5, and p is an integer of 1 to 8], such as $LiPF_5(CF_3)$;
organolithium salts represented by $LiBF_q(C_sF_{2s+1)4-q}$ [wherein q is an integer of 1 to 3, and s is an integer of 1 to 8], such as $LiBF_3(CF_3)$; lithium salts bonded to polyvalent anions; organolithium salts represented by the following formula (15a):

$$LiC(SO_2R^{22})(SO_2R^{23})(SO_2R^{24}) \qquad (15a)$$

wherein $R^{22}$ , $R^{23}$ and $R^{24}$ may be the same or different and represent a perfluoroalkyl group having 1 to 8 carbon atoms,
the following formula (15b):

$$LiN(SO_2\ OR^{25})(SO_2OR^{26}) \qquad (15b)$$

wherein $R^{25}$ and $R^{26}$ may be the same or different and represent a perfluoroalkyl group having 1 to 8 carbon atoms, and the following formula (15c):

$$LiN(SO_2R^{27})(SO_2OR^{28}) \qquad (15c)$$

wherein $R^{27}$ and $R^{28}$ may be the same or different and represent a perfluoroalkyl group having 1 to 8 carbon atoms, and the like, and one or more of these salts can be used together with the fluorine-containing inorganic lithium salt.

The amount of other lithium salts added to the nonaqueous electrolyte solution may be appropriately set, for example, within a range of 0.01 mol or more and 0.5 mol or less, as an amount per 1 L of the nonaqueous solvent.

<Electrode Protection Additives>

The nonaqueous electrolyte solution according to the present embodiment may contain an additive for protecting

the electrode (electrode protection additive). The electrode protection additive may substantially overlap with a substance (i.e., the nonaqueous solvent mentioned above) which serves as a solvent for dissolving the lithium salt. The electrode protection additive is preferably a substance which contributes to an improvement in performance of the nonaqueous electrolyte solution and the nonaqueous secondary battery, but also contains a substance which is not directly involved in the electrochemical reaction.

Specific examples of the electrode protection additive include:

fluoroethylene carbonates typified by 4-fluoro-1,3-dioxolan-2-one, 4,4-difluoro-1,3-dioxolan-2-one, cis-4,5-difluoro-1,3-dioxolan-2-one, trans-4,5-difluoro-1,3-dioxolan-2-one, 4,4,5-trifluoro-1,3-dioxolan-2-one, 4,4,5,5-tetrafluoro-1,3-dioxolan-2-one and 4,4,5-trifluoro-5-methyl-1,3-dioxolan-2-one;
unsaturated bond-containing cyclic carbonates typified by vinylene carbonate, 4,5-dimethylvinylene carbonate and vinylethylene carbonate;
lactones typified by γ-butyrolactone, γ-valerolactone, γ-caprolactone, δ-valerolactone, δ-caprolactone and ε-caprolactone;
cyclic ethers typified by 1,4-dioxane; and
cyclic sulfur compounds typified by ethylene sulfite, propylene sulfite, butylene sulfite, pentene sulfite, sulfolane, 3-sulfolene, 3-methyl sulfolane, 1,3-propane sultone, 1,4-butane sultone, 1-propene-1,3-sultone and tetramethylene sulfoxide. These electrode protection additives are used alone, or in combination of two or more thereof.

The content of the electrode protection additive in the nonaqueous electrolyte solution is preferably 0.1 to 30% by volume, more preferably 0.3 to 15% by volume, still more preferably 0.4 to 8% by volume, and particularly preferably 0.5 to 4% by volume, as the amount per total amount of the nonaqueous solvent.

In the present embodiment, the larger the content of the electrode protection additive, the more deterioration of the nonaqueous electrolyte solution can be inhibited. However, the smaller the content of the electrode protection additive, the more high output characteristics of the nonaqueous secondary battery in a low-temperature environment is improved. Therefore, by adjusting the content of the electrode protection additive within the above range, it tends to be possible to exhibit excellent performance based on high ionic conductivity of the electrolyte solution without impairing the basic function as a nonaqueous secondary battery. It tends to be able to be demonstrated. By preparing a nonaqueous electrolyte solution with such a composition, it tends to be possible to further improve the cycle performance of the nonaqueous secondary battery, high output performance in a low-temperature environment and other battery characteristics.

Acetonitrile easily undergoes electrochemical reductive decomposition. Therefore, the nonaqueous solvent containing acetonitrile preferably contains, as the electrode protection additive for forming a protective film on the negative electrode, one or more cyclic aprotic polar solvents, and more preferably one or more unsaturated bond-containing cyclic carbonates.

The unsaturated bond-containing cyclic carbonate is preferably vinylene carbonate, and the content of vinylene carbonate is preferably 0.1% by volume or more and 4% by volume or less, more preferably 0.2% by volume or more and less than 3% by volume, and still more preferably 0.5% by volume or more and less than 2.5% by volume, in the nonaqueous electrolyte solution. As a result, the low-temperature durability can be more effectively improved, thus making it possible to provide a secondary battery having excellent low-temperature performance.

The vinylene carbonate as the electrode protection additive inhibits the reductive decomposition reaction of acetonitrile on a surface of the negative electrode. Meanwhile, excessive film formation causes deterioration of low-temperature performance. Therefore, by adjusting the amount of vinylene carbonate added within the above range, the interface (film) resistance can be inhibited to a low level, thus making it possible to inhibit cycle deterioration at a low temperature.

<Acid Anhydride>

The nonaqueous secondary battery according to the present embodiment is stabilized by partially decomposing the nonaqueous electrolyte solution at the time of initial charging to form SEI on a surface of a negative electrode. An acid anhydride can be added to enhance this SEI more effectively. When acetonitrile is contained as a nonaqueous solvent, the strength of SEI tends to decrease as the temperature rises, but the addition of the acid anhydride promotes the enhancement of SEI. Therefore, use of the acid anhydride enables effective inhibition of an increase in internal resistance over time due to thermal history.

Specific examples of the acid anhydride include chain acid anhydrides typified by acetic anhydride, propionic anhydride and benzoic anhydride; cyclic acid anhydrides typified by malonic anhydride, succinic anhydride, glutaric anhydride, maleic anhydride, phthalic anhydride, 1,2-cyclohexanedicarboxylic anhydride, 2,3-naphthalenedicarboxylic anhydride or naphthalene-1,4,5,8-tetracarboxylic dianhydride; two different types of carboxylic acids, and mixed acid

anhydrides having a structure in which different types of acids undergo dehydration condensation, such as carboxylic acid and sulfonic acid. These acid anhydrides are used alone, or in combination of two or more thereof.

Since it is preferable for the nonaqueous secondary battery according to the present embodiment to enhance SEI before the reductive decomposition of the nonaqueous solvent, it is preferable to contain, as the acid anhydride, at least one cyclic acid anhydride which acts early at the time of initial charging. Only one type or plural types of these cyclic acid anhydrides may be contained. Alternatively, a cyclic acid anhydride other than these cyclic acid anhydrides may be contained. The cyclic acid anhydride preferably contains at least one of succinic anhydride, maleic anhydride and phthalic anhydride.

According to a nonaqueous electrolyte solution containing at least one of succinic anhydride, maleic anhydride and phthalic anhydride, it is possible to form strong SEI on a negative electrode, thus inhibiting more effectively an increase in resistance during high-temperature heating. In particular, it is preferable to contain succinic anhydride. Thus, it is possible to form strong SEI on the negative electrode more effectively while inhibiting the side reaction.

When the nonaqueous electrolyte solution according to the present embodiment contains an acid anhydride, the content thereof may be preferably within a range of 0.01 parts by weight or more and 10 parts by weight or less, more preferably 0.05 parts by weight or more and 1 part by weight or less, and still more preferably 0.1 parts by weight or more and 0.5 parts by weight or less, as the amount per 100 parts by weight of the nonaqueous electrolyte solution.

The acid anhydride is preferably contained in the nonaqueous electrolyte solution. Meanwhile, as long as the acid anhydride can act in a nonaqueous secondary battery, at least one battery member selected from the group consisting of a positive electrode, a negative electrode and a separator may contain the acid anhydride. As a method of containing the acid anhydride in the battery member, for example, the acid anhydride may be contained in the battery member at the time of fabricating the battery member, or the battery member may be impregnated with the acid anhydride by a post-treatment typified by coating, dipping or spray drying on the battery member.

<Optional Additives>

In the present embodiment, for the purpose of improving charging/discharging cycle properties, high-temperature storage and safety (for example, prevention of overcharging) of the nonaqueous secondary battery, it is also possible for the nonaqueous electrolyte solution to appropriately contain optional additives (additives other than the compounds represented by the general formulas (1) to (4) and (18), acid anhydrides and electrode protection additives).

Examples of the optional additive include a sulfonic acid ester, diphenyl disulfide, cyclohexylbenzene, biphenyl, fluorobenzene, tert-butylbenzene, a phosphoric acid ester [ethyldiethylphosphonoacetate (EDPA); $(C_2H_5O)_2(P{=}O)\text{-}CH_2(C{=}O)OC_2H_5$, tris(trifluoroethyl) phosphate (TFEP); $(CF_3CH_2O)_3P{=}O$, triphenyl phosphate (TPP); $(C_6H_5O)_3P{=}O$, triallyl phosphate; $(CH_2{=}CHCH_2O)_3P{=}O$, etc.], a nitrogen-containing cyclic compound with no steric hindrance around unshared electron pair [pyridine, 1-methyl-1H-benzotriazole, 1-methylpyrazole, etc.]. In particular, the phosphoric acid ester has the effect of inhibiting side reactions during storage and is effective as the optional additive.

When the nonaqueous electrolyte solution according to the present embodiment contains other optional additives, the content thereof is preferably within a range of 0.01% by weight or more and 10% by weight or less, more preferably 0.02% by weight or more and 5% by weight or less, and still more preferably 0.05 to 3% by weight. By adjusting the content of other optional additives within the above range, it tends to be possible to add more satisfactory battery characteristics without impairing the basic function of the nonaqueous secondary battery.

<Ionic Conductivity of Nonaqueous Electrolyte Solution>

In a nonaqueous secondary battery, when a below-mentioned separator of a preferred embodiment is combined with a nonaqueous electrolyte solution having low ionic conductivity, the moving speed of lithium ions is controlled by the ionic conductivity of the nonaqueous electrolyte solution, thus failing to obtain the desired input/output characteristics Therefore, the ionic conductivity of the nonaqueous electrolyte solution according to the present embodiment is preferably 10 mS/cm or more, more preferably 15 mS/cm or more, and still more preferably 20 mS/cm or more.

<Method for Producing Nonaqueous Electrolyte Solution>

The nonaqueous electrolyte solution in the present embodiment can be produced by mixing a nonaqueous solvent, a lithium salt and the compounds represented by the general formulas (1) to (4) and (18) together with other additives (electrode protection additives, acid anhydrides, and optional additives) as necessary by any means.

<<Nonaqueous Secondary Battery>>

The nonaqueous electrolyte solution according to the present embodiment can be used to form a nonaqueous

secondary battery.

The nonaqueous secondary battery according to the present embodiment is configured with a positive electrode, a negative electrode, a separator and a nonaqueous electrolyte solution housed in a suitable battery outer package.

Specifically, the nonaqueous secondary battery according to the present embodiment may be a nonaqueous secondary battery 100 shown in FIGs. 1 and 2. Here, FIG. 1 is a plan view schematically showing a nonaqueous secondary battery, and FIG. 2 is a cross-sectional view taken along line A-A of FIG. 1.

The nonaqueous secondary battery 100 shown in FIGs. 1 and 2 is composed of a pouch-type cell. The nonaqueous secondary battery 100 houses a laminated electrode structure formed by laminating a positive electrode 150 and a negative electrode 160 via a separator 170 in a space 120 of a battery outer package 110, and a nonaqueous electrolyte solution (not shown). The battery outer package 110 is made of, for example, an aluminum laminated film, and is sealed by heat-sealing the upper and lower films at the outer periphery of the space formed by the two aluminum laminated films. The laminated body in which the positive electrode 150, the separator 170 and the negative electrode 160 are laminated in this order is impregnated with the nonaqueous electrolyte solution. However, in FIG. 2, in order to avoid complicating the drawing, the layers constituting the battery outer package 110 and the layers of the positive electrode 150 and the negative electrode 160 are not shown separately.

The aluminum laminate film constituting the battery outer package 110 is preferably an aluminum laminate film in which both sides of the aluminum foil are coated with a polyolefin-based resin.

The positive electrode 150 is connected to a positive electrode lead body 130 in the nonaqueous secondary battery 100. Although not shown, the negative electrode 160 is also connected to a negative electrode lead body 140 in the nonaqueous secondary battery 100. One end of each of the positive electrode lead body 130 and the negative electrode lead body 140 is pulled out to the outside of the battery outer package 110 so that they can be connected to an external device or the like, and their ionomer portions are heat-sealed together with one side of the battery outer package 110.

In the nonaqueous secondary battery 100 shown in FIGs. 1 and 2, the positive electrode 150 and the negative electrode 160 each have one laminated electrode structure, but the number of laminated positive electrodes 150 and negative electrodes 160 can be appropriately increased by the capacity design. In the case of a laminated electrode structure having a plurality of positive electrodes 150 and negative electrodes 160, tabs of the same electrode may be joined by welding or the like, and then joined to one lead body by welding or the like and taken out of the battery. As the tab of the same pole, a mode composed of the exposed portion of a current collector, a mode configured by welding a metal piece to the exposed portion of a current collector, and the like are possible.

The positive electrode 150 is composed of a positive electrode current collector and a positive electrode active material layer. The negative electrode 160 is composed of a negative electrode current collector and a negative electrode active material layer.

The positive electrode active material layer contains a positive electrode active material, and the negative electrode active material layer contains a negative electrode active material.

The positive electrode 150 and the negative electrode 160 are arranged so that the positive electrode active material layer and the negative electrode active material layer face each other via the separator 170.

Hereinafter, each element constituting the nonaqueous secondary battery according to the present embodiment will be described in order.

<Positive Electrode>

In the nonaqueous secondary battery according to the present embodiment, the positive electrode has a positive electrode active material layer on one or both sides of the positive electrode current collector.

[Positive Electrode Current Collector]

The positive electrode current collector is composed of, for example, a metal foil such as an aluminum foil, a nickel foil or a stainless steel foil. The surface of the positive electrode current collector may be coated with carbon, and may be processed into a mesh shape. The thickness of the positive electrode current collector is preferably 5 to 40 μm, more preferably 7 to 35 μm, and still more preferably 9 to 30 μm.

[Positive Electrode Active Material Layer]

The positive electrode active material layer contains a positive electrode active material, and may further contain a conductive aid and/or a binder as necessary.

(Positive Electrode Active Material)

The positive electrode active material layer preferably contains a material capable of occluding and releasing lithium ions as the positive electrode active material. When such a material is used, it tends to be possible to obtain high voltage and high energy density, which is preferable.

The positive electrode active material includes, for example, a positive electrode active material containing at least one transition metal element selected from the group consisting of Ni, Mn and Co, and is suitably at least one selected from lithium-containing metal oxides represented by the following general formula (14):

$$Li_pNi_qCo_rMn_sMtO_u \qquad (14)$$

wherein M is at least one metal selected from the group consisting of Al, Sn, In, Fe, V, Cu, Mg, Ti, Zn, Mo, Zr, Sr and Ba, p, q, r, s, t and u are within the following ranges: $0 < p < 1.3$, $0 < q < 1.2$, $0 < r < 1.2$, $0 \leq s < 0.5$, $0 \leq t < 0.3$, $0.7 \leq q + r + s + t \leq 1.2$, and $1.8 < u < 2.2$, and p is the value determined by the charge-discharge state of the battery.

Examples of the positive electrode active material include:

lithium cobalt oxide typified by $LiCoO_2$;
lithium manganese oxide typified by $LiMnO_2$, $LiMn_2O_4$ and $Li_2Mn_2O_4$;
lithium nickel oxide typified by $LiNiO_2$;
lithium-containing composite metal oxide represented by $Li_zMO_2$, typified by $LiNi_{1/3}Co_{1/3}Mn_{1/3}O_2$, $LiNi_{0.5}Co_{0.2}Mn_{0.3}O_2$, $LiNi_{0.8}Co_{0.2}O_2$, $LiNi_{0.6}Co_{0.2}Mn_{0.2}O_2$, $LiNi_{0.75}Co_{0.15}Mn_{0.15}O_2$, $LiNi_{0.8}Co_{0.1}Mn_{0.1}O_2$, $LiNi_{0.85}Co_{0.075}Mn_{0.075}O_2$, $LiNi_{0.8}Co_{0.15}Al_{0.05}O_2$, $LiNi_{0.81}Co_{0.1}Al_{0.09}O_2$ and $LiNi_{0.85}Co_{0.1}Al_{0.05}O_2$(wherein M contains at least one transition metal element selected from the group consisting of Ni, Mn and Co and represents two or more metal elements selected from the group consisting of Ni, Mn, Co, Al and Mg, and z represents a number of more than 0.9 and less than 1.2); metal oxide or metal chalcogenide with tunnel and layered structures, typified by $MnO_2$, $FeO_2$, $FeS_2$, $V_2O_5$, $V_6O_{13}$, $TiO_2$, $TiS_2$, $MoS_2$ and $NbSe_2$ ;
sulfur;
conductive polymer typified by polyaniline, polythiophene, polyacetylene and polypyrrole; and the like.

In particular, when a Ni content ratio q of the Li-containing metal oxide represented by the general formula (14) satisfies $0.5 < q < 1.2$, it is preferable because both a reduction in the amount of Co, which is a rare metal, and higher energy density are achieved.

Here, as the Ni content ratio increases, deterioration tends to progress at a low voltage. The positive electrode active material of the lithium-containing metal oxide represented by the general formula (14) has an active site which causes oxidative deterioration of the nonaqueous electrolyte solution, and this active site sometimes unintentionally consumes a compound added to protect the negative electrode on the positive electrode side. Of these, an acid anhydride tends to be easily affected. In particular, when acetonitrile is contained as a nonaqueous solvent, because of great effect of adding the acid anhydride, the acid anhydride is consumed on the positive electrode side, which is a problem.

These additive decomposition products taken in and deposited on the positive electrode side not only increase the internal resistance of the nonaqueous secondary battery, but also accelerate deterioration of the lithium salt. Further, the protection of the negative electrode surface also becomes insufficient. In order to deactivate the active site which essentially causes oxidative deterioration of the nonaqueous electrolyte solution, it is preferable to control the Jahn-Teller strain or to coexist with a component which acts as a neutralizer. Therefore, the positive electrode active material preferably contains at least one metal selected from the group consisting of Al, Sn, In, Fe, V, Cu, Mg, Ti, Zn, Mo, Zr, Sr and Ba.

For the same reason, it is preferable that a surface of the positive electrode active material is coated with a compound containing at least one metal element selected from the group consisting of Zr, Ti, Al and Nb. It is more preferable that a surface of the positive electrode active material is coated with an oxide containing at least one metal element selected from the group consisting of Zr, Ti, Al and Nb. It is still more preferable that a surface of the positive electrode active material is coated with at least one oxide selected from the group consisting of $ZrO_2$, $TiO_2$, $Al_2O_3$, $NbO_3$ and $LiNbO_2$ because it does not inhibit the permeation of lithium ions.

The positive electrode active material may be a lithium-containing compound other than the lithium-containing metal oxide represented by the formula (14). Examples of such a lithium-containing compound include a composite oxide containing lithium and a transition metal element, a metal chalcogenide containing lithium, a metal phosphate compound containing lithium and a transition metal element, and a metal silicate compound containing lithium and a transition metal element. From the viewpoint of obtaining higher voltage, the lithium-containing compound is particularly preferably a metal phosphate compound containing lithium and at least one transition metal element selected from the group consisting of Co, Ni, Mn, Fe, Cu, Zn, Cr, V and Ti.

More specific examples include compounds each represented by the following formula (16a):

$$Li_vM^ID_2 \qquad (16a)$$

wherein D represents a chalcogen element, $M^I$ represents one or more transition metal elements containing at least one transition metal element, the value of v is determined by the charge/discharge state of the battery and represents a number of 0.05 to 1.10, and u represents an integer of 0 to 2,
the following formula (16b):

$$Li_w\ M^{II}PO_4 \qquad (16b)$$

wherein D represents chalcogen element, $M^{II}$ represents one or more transition metal elements containing at least one transition metal element, the value of w is determined by the charge/discharge state of the battery and represents a number of 0.05 to 1.10, and u represents an integer of 0 to 2, and
the following formula (16c):

$$Li_tM^{III}{}_uSiO_4 \qquad (16c)$$

wherein D represents chalcogen element, $M^{III}$ represents one or more transition metal elements containing at least one transition metal element, the value of t is determined by the charge/discharge state of the battery and represents a number of 0.05 to 1.10, and u represents an integer of 0 to 2.
The lithium-containing compound represented by the above formula (16a) has a layered structure, and the compounds represented by the above formulas (16b) and (16c) have an olivine structure. For the purpose of stabilizing the structure, these lithium-containing compounds may be those in which transition metal elements are partially substituted with Al, Mg or other transition metal elements, those in which these metal elements are included in grain boundaries, those in which oxygen atoms are partially substituted with a fluorine atom or the like, those in which a surface of the positive electrode active material is partially coated with other positive electrode active materials, and the like.
The positive electrode active material may be used alone, or in combination of two or more thereof. Since lithium ions can be occluded and released in a reversible and stable manner, and high energy density can be achieved, it is preferable that the positive electrode active material layer contains at least one transition metal element selected from Ni, Mn and Co.
When a lithium-containing compound and other positive electrode active materials are used in combination as the positive electrode active material, a ratio of both used is preferably 80% by weight or more, and more preferably 85% by weight or more, as the ratio of the lithium-containing compound used to the entire positive electrode active material used.

(Conductive Aid)

Examples of the conductive aid include carbon blacks typified by graphite, acetylene black and Ketjen black, and carbon fiber. The content of the conductive aid is preferably set at 10 parts by weight or less, and more preferably 1 to 5 parts by weight, as the amount per 100 parts by weight of the positive electrode active material.

(Binder)

Examples of the binder include polyvinylidene fluoride (PVDF), polytetrafluoroethylene (PTFE), polyacrylic acid, styrene-butadiene rubber and fluororubber. The content of the binder is preferably set at 6 parts by weight or less, and more preferably 0.5 to 4 parts by weight, as the amount per 100 parts by weight of the positive electrode active material.

[Formation of Positive Electrode Active Material Layer]

The positive electrode active material layer is formed by applying a positive electrode mixture-containing slurry, which is prepared by dispersing a positive electrode mixture obtained by mixing a positive electrode active material, and a conductive aid and a binder as necessary, in a solvent, to a positive electrode current collector, followed by drying (removing the solvent) and pressing as necessary. It is possible to use, as such a solvent, a known solvent. Examples thereof include N-methyl-2-pyrrolidone, dimethylformamide, dimethylacetamide, water and the like.

<Negative Electrode>

The negative electrode in the nonaqueous secondary battery according to the present embodiment has a negative electrode active material layer on one or both sides of the negative electrode current collector.

[Negative Electrode Current Collector]

The negative electrode current collector is composed of, for example, a metal foil such as a copper foil, a nickel foil or a stainless steel foil. Further, the negative electrode current collector may have carbon coating applied on a surface thereof or may be processed into a mesh shape. The thickness of the negative electrode current collector is preferably 5 to 40 $\mu$m, more preferably 6 to 35 $\mu$m, and still more preferably 7 to 30 $\mu$m.

[Negative Electrode Active Material Layer]

The negative electrode active material layer contains a negative electrode active material, and may further contain a conductive aid and/or a binder as necessary.

(Negative Electrode Active Material)

Examples of the negative electrode active material include amorphous carbon (hard carbon), artificial graphite, natural graphite, graphite, thermally decomposed carbon, coke, glassy carbon, calcined product of organic polymer compound, mesocarbon microbeads, carbon materials typified by carbon fiber, activated carbon, graphite, carbon colloid and carbon black, as well as metallic lithium, metal oxides, metal nitrides, lithium alloys, tin alloys, Si materials, intermetallic compounds, organic compounds, inorganic compounds, metal complexes and organic polymer compounds. The negative electrode active materials may be used alone, or in combination of two or more thereof. Examples of the Si material include silicon, Si alloy, Si oxide and the like.

It is preferable that the negative electrode active material layer contains, as the negative electrode active material, a material capable of occluding lithium ions at a lower potential than 0.4 V vs. $Li/Li^+$ from the viewpoint of increasing the battery voltage.

The nonaqueous electrolyte solution according to the present embodiment has an advantage that even when a Si material is applied to the negative electrode active material, it is possible to inhibit various deterioration phenomena due to a volume change of the negative electrode when charging/discharging cycle is repeated. Therefore, in the nonaqueous secondary battery according to the present embodiment, use of the Si material typified by a silicon alloy or the like as the negative electrode active material is a preferred mode in that excellent charging/discharging cycle characteristics are achieved while having a high capacity derived from the Si material.

In the present embodiment, a Si material, especially $SiO_x$ (wherein $0.5 \leq x \leq 1.5$), may be contained as the negative electrode active material. The Si material may be in any form of a crystalline structure, a low crystalline structure and an amorphous structure. When a Si material is used as the negative electrode active material, it is preferable to coat a surface of the active material with a conductive material because the conductivity between the active material particles is improved.

Silicon has an operating potential of about 0.5 V (vs. $Li/Li^+$), which is slightly higher than the operating potential of graphite of about 0.05 V (vs. $Li/ Li^+$). Therefore, use of the Si material reduces the risk of lithium electrodeposition. Acetonitrile used as the nonaqueous solvent in the present embodiment may react with lithium metal to cause gas generation. Therefore, a negative electrode active material which hardly causes lithium electrodeposition is preferable when used in combination with a nonaqueous electrolyte solution containing acetonitrile.

Meanwhile, a negative electrode active material having an excessively high operating potential reduces the energy density of the battery. Therefore, from the viewpoint of improving the energy density, it is preferable that the negative electrode active material operates at a lower potential than 0.4 V vs. $Li/Li^+$ .

The content of the Si material is preferably within a range of 0.1% by weight or more and 100% by weight or less, preferably 1% by weight or more and 80% by weight or less, and more preferably 3% by weight or more and 60% by weight or less, as the amount per total amount of the negative electrode active material layer. By adjusting the content of the Si material within the above range, it is possible to ensure a balance between higher capacity of the nonaqueous secondary battery and charging/discharging cycle performance.

(Conductive Aid)

Examples of the conductive aid include carbon black typified by graphite, acetylene black and Ketjen black, and carbon fiber. The content of the conductive aid is preferably 20 parts by weight or less, more preferably 0.1 to 10

parts by weight, as the amount per 100 parts by weight of the negative electrode active material.

(Binder)

Examples of the binder include carboxymethyl cellulose, polyvinylidene fluoride (PVDF), polytetrafluoroethylene (PTFE), polyacrylic acid and fluororubber. A diene-based rubber such as a styrene-butadiene rubber can also be exemplified. The content of the binder is preferably set at 10 parts by weight or less, and more preferably 0.5 to 6 parts by weight, as the amount per 100 parts by weight of the negative electrode active material.

[Formation of Negative Electrode Active Material Layer]

The negative electrode active material layer is formed by applying a negative electrode mixture-containing slurry, which is prepared by dispersing a negative electrode mixture obtained by mixing a negative electrode active material, and a conductive aid and a binder as necessary, in a solvent, to a negative electrode current collector, followed by drying (removing the solvent) and pressing as necessary. It is possible to use, as such a solvent, a known solvent. Examples thereof include N-methyl-2-pyrrolidone, dimethylformamide, dimethylacetamide, water and the like.

[Decomposition Product of Acid Anhydride]

Here, the above acid anhydride is added to more effectively enhance SEI on a surface of the negative electrode. In the nonaqueous secondary battery according to the present embodiment, a decomposition product of an acid anhydride is contained in the positive electrode and the negative electrode, and the amount of the decomposition product per unit area of the acid anhydride contained in the positive electrode is less than the amount of the decomposition product per unit area of the acid anhydride contained in the negative electrode.

When acetonitrile is contained as the nonaqueous solvent, the amount of the decomposition product per unit area of the acid anhydride contained in the positive electrode is preferably less than the amount of the decomposition product per unit area of the acid anhydride contained in the negative electrode. This makes it easier to effectively inhibit an increase in internal resistance over time due to thermal history.

The amount of the decomposition product of the acid anhydride is also calculated based on, for example, the peak area value of LC-MS measurement relative to the unit gram mass of the negative electrode active material. The amount of the decomposition product of the acid anhydride (content of at least one compound selected from the group consisting of compounds represented by the following general formulas (8) to (13)) is preferably within a range of 0.1 to 200, more preferably 1 to 175, and still more preferably 20 to 150, in terms of the peak area value as the amount per 1 $\mu$g of the negative electrode active material. When the peak area value is within this range, it is possible to ensure a balance between inhibition of increase in film resistance and solubility. It is preferable that the above content is satisfied within a range of up to 100 cycles of repeating charging and discharging.

It is preferable that the decomposition product of the acid anhydride contains at least one compound selected from the group consisting of compounds represented by the following general formula (8):

[Chemical Formula 28]

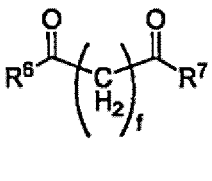

..... (8)

wherein $R^6$ and $R^7$ represent an alkoxy group which may be substituted with a halogen atom, an OH group or an OLi group and f is an integer of 1 to 3;
the following general formula (9):

[Chemical Formula 29]

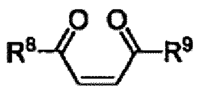

..... (9)

wherein $R^8$ and $R^9$ represent an alkoxy group which may be substituted with a halogen atom, an OH group or an OLi group; the following general formula (10):

[Chemical Formula 30]

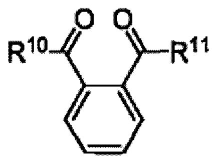

..... (10)

wherein $R^{10}$ and $R^{11}$represent an alkoxy group which may be substituted with a halogen atom, an OH group or an OLi group;
the following general formula (11):

[Chemical Formula 31]

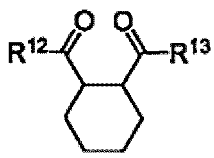

..... (11)

wherein $R^{12}$ and $R^{13}$ represent an alkoxy group which may be substituted with a halogen atom, an OH group or an OLi group;
the following general formula (12):

[Chemical Formula 32]

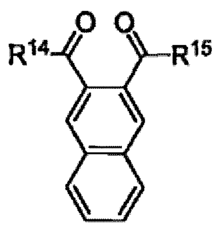

..... (12)

wherein $R^{14}$ and $R^{15}$represent an alkoxy group which may be substituted with a halogen atom, an OH group or an OLi group; and
the following general formula (13):

[Chemical Formula 33]

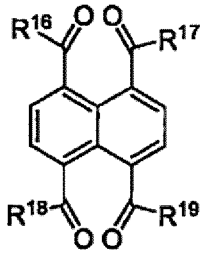

..... (13)

wherein $R^{16}$ to $R^{19}$ represent an alkoxy group which may be substituted with a halogen atom, an OH group or an OLi group. The "halogen atom" in the description of the general formulas (8) to (13) may contain an F atom.

These compounds contribute to the enhancement of SEI on a surface of the negative electrode. In particular, when acetonitrile is contained as the nonaqueous solvent, excellent effect is exerted. Therefore, it is preferable to prevent the acid anhydride from being unnecessarily consumed on the positive electrode side.

<Separator>

It is preferable that the nonaqueous secondary battery according to the present embodiment is provided with a separator between a positive electrode and a negative electrode from the viewpoint of preventing short circuits between the positive electrode and the negative electrode and imparting safety such as shutdown. As the separator, the same one as which provided in a known nonaqueous secondary battery may be used, and an insulating thin film having high ionic permeability and excellent mechanical strength is preferable. Examples of the material constituting the separator include a woven fabric, a non-woven fabric, a microporous membrane made of a synthetic resin and the like. Of these, a microporous membrane made of a synthetic resin is preferable, and especially a polyolefin-based microporous membrane such as a microporous membrane containing polyethylene or polypropylene as a main component, or a microporous membrane containing both of these polyolefins is preferably used. Examples of the non-woven fabric include porous films made of heat-resistant resins such as glass, ceramic, polyolefin, polyester, polyamide, liquid crystal polyester and aramid.

The separator may be formed by laminating a single layer or laminated from a plurality of layers of one type of microporous membrane, or laminated from a plurality of layers of two or more types of microporous membrane. The separator may be formed by laminating a single layer or laminated from a mixed resin material obtained by melt-kneading two or more types of resin materials.

Inorganic particles may be present on a surface layer or the inside of the separator for the purpose of imparting a predetermined function to the separator, and other organic layers may be further formed or laminated on the separator. The separator may have a crosslinked structure. In order to improve the safety performance of the nonaqueous secondary battery, these methods may be combined as necessary.

<Battery Outer Package>

It is possible to employ, as the configuration of the battery outer package of the nonaqueous secondary battery in the present embodiment, a known configuration. For example, a battery can or a laminated film outer package body may be used as the battery outer package.

It is possible to use, as the battery can, for example, a metal can made of steel, stainless steel, aluminum or a clad material.

The laminated film outer package body can be used as an outer package body in a state where two sheets are laminated with the hot melt resin side facing inward, or bent so that the heat-melt resin side faces inward, and then the end is sealed by heat sealing. When the laminated film outer package body is used, a positive electrode lead body (or a lead tab connected to a positive electrode terminal and a positive electrode terminal) may be connected to a positive electrode current collector, and a negative electrode lead body (or a lead tab connected to a negative electrode terminal and a negative electrode terminal) may be connected to a negative electrode current collector. In this case, the laminated film outer body may be sealed in a state where the ends of the positive electrode lead body and the negative electrode lead body (or lead tabs connected to the positive electrode terminal and the negative electrode terminal respectively) are pulled out to the outside of the battery outer package body.

It is possible to use, as the laminated film outer package body, for example, a laminate film having a three-layered structure of a heat-melt resin/metal film/resin.
The aluminum laminate film constituting the battery outer package 110 is preferably a film in which both sides of the aluminum foil are coated with a polyolefin-based resin.

<Shape of Nonaqueous Secondary Battery>

The shape of the nonaqueous secondary battery according to the present embodiment can be applied to, for example, a square-type, a square cylinder-type, a cylindrical-type, an elliptical-type, a button-type, a coin-type, a flat-type, a laminate-type and the like.
The nonaqueous secondary battery according to the present embodiment can be particularly preferably applied to a square-type, a square cylinder-type and a laminate-type.

<Method for Producing Nonaqueous Secondary Battery>

The nonaqueous secondary battery according to the present embodiment can be fabricated by a known method using the above-mentioned nonaqueous electrolyte solution, positive electrode, negative electrode, separator and battery outer package.
First, a laminate composed of a positive electrode, a negative electrode and a separator is formed.
At this time, for example, it is possible to employ:

a mode in which a long positive electrode and negative electrode are wound in a laminated state where a long separator is interposed into the gaps to form a laminated body having a wound structure;
a mode in which a positive electrode sheet and a negative electrode sheet obtained by cutting into a plurality of sheets having the same area and shape are alternately laminated via a separator sheet to form a laminated body; and
a mode in which a long separator is folded into a spiral, and a positive electrode sheet and a negative electrode sheet are alternately inserted into the gaps between the spiral separators to form a laminated body having a laminated structure.

Next, the above laminated body is housed in the battery outer package and the nonaqueous electrolyte solution according to the present embodiment is injected into the battery outer package, and then the laminated body is immersed in the nonaqueous electrolyte solution, followed by sealing, thus enabling the production of the nonaqueous secondary battery according to the embodiment.
Alternatively, a nonaqueous secondary battery may be fabricated by impregnating a base material made of a polymer material with the nonaqueous electrolyte solution according to the present embodiment to fabricate an electrolyte membrane in a gel state in advance, forming a laminated body having a laminated structure using a sheet positive electrode and negative electrode, an electrolyte film thus obtained, and a separator, and housing the laminated body in a battery outer package.
It should be noted that the arrangement of the electrodes is designed such that when there is a portion where the outer peripheral edge of the negative electrode active material layer and the outer peripheral edge of the positive electrode active material layer overlap, or there is a portion having too small width in the non-opposing portion of the negative electrode active material layer, there is a possibility that electrode misalignment occurs during battery assembling. In this case, charging/discharging cycle characteristics of the nonaqueous secondary battery may deteriorate. In order to prevent such a situation, it is preferable to fix the position of the electrode in advance with tapes such as a polyimide tape, a polyphenylene sulfide tape, a PP tape, an adhesive and the like.
When a nonaqueous electrolyte solution using acetonitrile is used, due to its high ionic conductivity, lithium ions released from the positive electrode during the initial charging of the nonaqueous secondary battery may diffuse to the entire negative electrode. In the nonaqueous secondary battery, the area of the negative electrode active material layer is commonly larger than that of the positive electrode active material layer. However, if lithium ions are diffused and occluded to the portion of the negative electrode active material layer which does not face the positive electrode active material layer, lithium ions are not released during initial discharging and remain in the negative electrode. Therefore, the contribution of the unreleased lithium ions becomes an irreversible capacity. For this reason, the nonaqueous secondary battery using a nonaqueous electrolyte solution containing acetonitrile may exhibit low initial charging/discharging efficiency.
Meanwhile, when the area of the positive electrode active material layer is larger than that of the negative electrode active material layer, or both are the same, current is likely to be concentrated at the edge portion of the negative electrode active material layer during charging, thus making it easier to form lithium dendrite.
For the above reasons, a ratio of the area of the entire negative electrode active material layer to the area of

the portion where the positive electrode active material layer and the negative electrode active material layer face each other is preferably more than 1.0 and less than 1.1, more preferably more than 1.002 and less than 1.09, still more preferably more than 1.005 and less than 1.08, and particularly preferably more than 1.01 and less than 1.08. In the nonaqueous secondary battery using a nonaqueous electrolyte solution containing acetonitrile, it is possible to improve the initial charging/discharging efficiency by decreasing the ratio of the area of the entire negative electrode active material layer to the area of the portion where the positive electrode active material layer and the negative electrode active material layer face each other.

Decreasing the ratio of the area of the entire negative electrode active material layer to the area of the portion where the positive electrode active material layer and the negative electrode active material layer face each other means limiting the proportion of the area of the portion of the negative electrode active material layer which does not face the positive electrode active material layer. Thus, it becomes possible to minimize the amount of lithium ions occluded in the portion of the negative electrode active material layer which does not face the positive electrode active material layer (i.e., the amount of lithium ions which are not released from the negative electrode during the initial discharge and become the irreversible capacity) of lithium ions released from the positive electrode during initial charging. Therefore, by designing the ratio of the area of the entire negative electrode active material layer to the area of the portion where the positive electrode active material layer and the negative electrode active material layer face each other within the above range, it is possible to enhance initial charging/discharging efficiency of the battery and also to inhibit the formation of lithium dendrite while intendedly improving load characteristics of the battery by using acetonitrile.

The nonaqueous secondary battery according to the present embodiment can function as a battery by initial charging, but is stabilized by partially decomposing the nonaqueous electrolyte solution at the time of initial charging. Initial charging is preferably carried out at 0.001 to 0.3 C, more preferably 0.002 to 0.25 C, and still more preferably 0.003 to 0.2 C. It is also possible to give preferable results by carrying out initial charging via constant voltage charging on the way. The constant current which discharges the design capacity in 1 hour is 1 C. By setting a long voltage range in which the lithium salt is involved in the electrochemical reaction, a stable and strong SEI is formed on a surface of the electrode, which exerts the effect of inhibiting an increase in internal resistance, and somehow exerts satisfactory effect on members other than the negative electrode 160, such as the positive electrode 150 and the separator 170, without causing firm fixation of the reaction product to only the negative electrode 160. Therefore, it is remarkably effective to carry out initial charging in consideration of the electrochemical reaction of the lithium salt dissolved in the nonaqueous electrolyte solution.

The nonaqueous secondary battery 100 in the present embodiment can also be used as a battery pack in which a plurality of nonaqueous secondary batteries 100 are connected in series or in parallel. From the viewpoint of controlling the charge/discharge state of the battery pack, the working voltage range per battery pack is preferably 2 to 5 V, more preferably 2.5 to 5 V, and particularly preferably 2.75 V to 5 V.

While embodiments for carrying out the present invention have been described in detail above, the present invention is not limited to the following embodiments and various modifications can be made without departing from the scope of the present invention.

<Second Embodiment>

The nonaqueous secondary battery according to the present embodiment will be described below.

In the present embodiment, the elements described in the first embodiment can be appropriately applied to various elements for obtaining a nonaqueous secondary battery. For example, preferred embodiments and operational advantages based on the preferred embodiments are as described in the first embodiment.

<<Nonaqueous Electrolyte Solution>>

In the nonaqueous secondary battery according to the present embodiment, it is possible to use, as the nonaqueous electrolyte solution, the nonaqueous electrolyte solution described in the first embodiment.

Therefore, in the nonaqueous secondary battery according to the present embodiment, the nonaqueous solvent preferably contains a cyclic carbonate as in the first embodiment, and when the nonaqueous solvent contains the cyclic carbonate, the cyclic carbonate thereof preferably contains ethylene carbonate, vinylene carbonate and/or fluoroethylene carbonate. By using such a nonaqueous solvent containing a cyclic carbonate, it becomes possible to use a decomposition reaction product of the cyclic carbonate such that the negative electrode contains at least one compound selected from the group consisting of the compounds represented by the general formulas (4A) to (6A) mentioned below.

<<Nonaqueous Secondary Battery>>

The nonaqueous secondary battery according to the present embodiment comprises a positive electrode, a

negative electrode, a separator and a nonaqueous electrolyte solution.

<Negative Electrode>

The negative electrode in the nonaqueous secondary battery according to the present embodiment has a negative electrode active material layer on one or both sides of a negative electrode current collector.

The negative electrode contains at least one compound selected from the group consisting of compounds represented by the following general formula (4A):

[Chemical Formula 34]

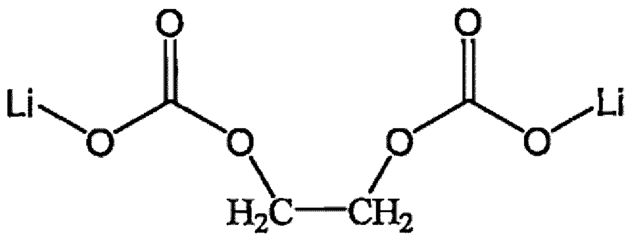

(4 A)

the following general formula (5A):

[Chemical Formula 35]

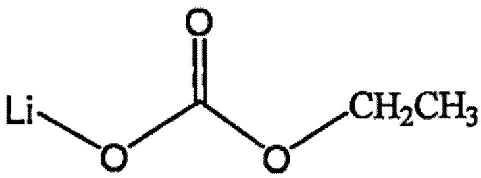

(5 A)

and
the following general formula (6A):

[Chemical Formula 36]

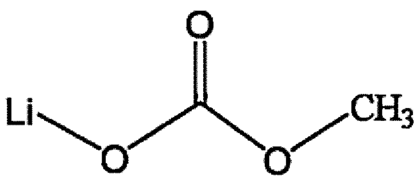

(6 A)

By using at least one selected from the group consisting of the compounds represented by the general formulas (4A) to (6A), the physical strength against expansion and contraction of the negative electrode is further strengthened, so it becomes easy to inhibit deterioration of the electrode characteristics due to charging/discharging cycle. Therefore, by using at least one selected from the group consisting of the compounds represented by the general formulas (4A) to (6A), it becomes easy to ensure a balance between physical strength against expansion and contraction of the negative electrode and solubility.

The content of at least one selected from the group consisting of the compounds represented by the general formulas (4A) to (6A) is calculated by dividing the quantitative value obtained by the analysis of a negative electrode protective film component by the mass of the negative electrode active material. The content of at least one compound selected from the group consisting of the compounds represented by the general formulas (4A) to (6A) is preferably 0.01 to 100 mg, more preferably 0.05 to 50 mg, and still more preferably 0.1 to 10 mg, as the amount per 1 g of the negative electrode active material. When the content is within this range, it becomes easy to inhibit an increase in film resistance due to charging/discharging cycle without impairing the basic function of the nonaqueous secondary battery. It is preferable that the above content is satisfied within a range of up to 100 cycles of repeating charging and discharging.

At this time, the negative electrode may contain $PF_6$ anions, and may also contain $N(SO_2F)_2$ anions and/or $N(SO_2CF_3)_2$ anions. That is, the nonaqueous electrolyte solution may contain at least one anion selected from the group consisting of $PF_6$ anions, $N(SO_2F)_2$ anions and/or $N(SO_2CF_3)_2$ anions. Anions promote the effect of forming a protective film and form a passivation film on a surface of a surface foil which is a positive electrode current collector, and are therefore preferable from the viewpoint of inhibiting an increase in internal resistance.

In the nonaqueous secondary battery according to the present embodiment, the positive electrode and the negative electrode contain at least one compound selected from the group consisting of the compounds represented by the general formulas (4A) to (6A), and it is preferable that the amount of the compound contained in the positive electrode is less than the amount of the compound contained in the negative electrode. According to this, SEI on the surface of the negative electrode can be enhanced more effectively. Further, when acetonitrile is contained as the nonaqueous solvent, it is possible to effectively inhibit an increase in internal resistance over time due to thermal history

The content of at least one selected from the group consisting of the compounds represented by the general formulas (4A) to (6A) in the negative electrode is calculated by dividing the quantitative value obtained by the analysis of a negative electrode protective film component by the mass of the negative electrode active material.

The content of at least one selected from the group consisting of the compounds represented by the general formulas (4A) to (6A) in the positive electrode is calculated by dividing the quantitative value obtained by the analysis of a positive electrode protective film component by the mass of the positive electrode active material.

[Negative Electrode Current Collector]

The negative electrode current collector is composed of, for example, a metal foil such as copper foil, nickel foil, or stainless steel foil. The surface of the negative electrode current collector may be coated with carbon, and may be processed into a mesh shape. The thickness of the positive electrode current collector is preferably 5 to 40 $\mu$m, more preferably 6 to 35 $\mu$m, and still more preferably 7 to 30 $\mu$m.

[Negative Electrode Active Material Layer]

The negative electrode active material layer may contain a negative electrode active material, and may further contain a conductive aid and/or a binder as necessary.

(Negative Electrode Active Material)

Examples of the negative electrode active material include amorphous carbon (hard carbon), artificial graphite, natural graphite, graphite, thermally decomposed carbon, coke, glassy carbon, calcined product of organic polymer compound, mesocarbon microbeads, carbon materials typified by carbon fiber, activated carbon, graphite, carbon colloid and carbon black, as well as metallic lithium, metal oxides, metal nitrides, lithium alloys, tin alloys, Si materials, intermetallic compounds, organic compounds, inorganic compounds, metal complexes and organic polymer compounds. The negative electrode active materials may be used alone, or in combination of two or more thereof. Examples of the Si material include silicon, Si alloy, Si oxide and the like.

It is preferable that the negative electrode active material layer contains, as the negative electrode active material, a material capable of occluding lithium ions at a lower potential than 0.4 V vs. $Li/Li^+$ from the viewpoint of increasing the battery voltage.

The nonaqueous electrolyte solution according to the present embodiment has an advantage that even when a Si material is applied to the negative electrode active material, it is possible to inhibit various deterioration phenomena due to a volume change of the negative electrode when charging/discharging cycle is repeated. Therefore, in the nonaqueous secondary battery according to the present embodiment, use of the Si material typified by a silicon alloy or the like as the negative electrode active material is a preferred mode in that excellent charging/discharging cycle characteristics are achieved while having a high capacity derived from the Si material.

In the present embodiment, a Si material, especially $SiO_x$ (wherein $0.5 \leq x \leq 1.5$), may be contained as the negative electrode active material. The Si material may be in any form of a crystalline structure, a low crystalline structure

and an amorphous structure. When a Si material is used as the negative electrode active material, it is preferable to coat a surface of the active material with a conductive material because the conductivity between the active material particles is improved.

Silicon has an operating potential of about 0.5 V (vs. $Li/Li^+$), which is slightly higher than the operating potential of graphite of about 0.05 V (vs. $Li/ Li^+$). Therefore, use of the Si material reduces the risk of lithium electrodeposition. Acetonitrile used as the nonaqueous solvent in the present embodiment may react with lithium metal to cause gas generation. Therefore, a negative electrode active material which hardly causes lithium electrodeposition is preferable when used in combination with a nonaqueous electrolyte solution containing acetonitrile.

Meanwhile, a negative electrode active material having an excessively high operating potential reduces the energy density of the battery. Therefore, from the viewpoint of improving the energy density, it is preferable that the negative electrode active material operates at a lower potential than 0.4 V vs. $Li/Li^+$ .

The content of the Si material is preferably within a range of 0.1% by weight or more and 100% by weight or less, preferably 1% by weight or more and 80% by weight or less, and more preferably 3% by weight or more and 60% by weight or less, as the amount per total amount of the negative electrode active material layer. By adjusting the content of the Si material within the above range, it is possible to ensure a balance between higher capacity of the nonaqueous secondary battery and charging/discharging cycle performance.

(Conductive Aid)

Examples of the conductive aid include carbon black typified by graphite, acetylene black and Ketjen black, and carbon fiber. The content of the conductive aid is preferably 20 parts by weight or less, more preferably 0.1 to 10 parts by weight, as the amount per 100 parts by weight of the negative electrode active material.

(Binder)

Examples of the binder include carboxymethyl cellulose, PVDF, PTFE, polyacrylic acid and fluororubber. A diene-based rubber such as a styrene-butadiene rubber can also be exemplified. The content of the binder is preferably set at 10 parts by weight or less, and more preferably 0.5 to 6 parts by weight, as the amount per 100 parts by weight of the negative electrode active material.

[Formation of Negative Electrode Active Material Layer]

The negative electrode active material layer is formed by applying a negative electrode mixture-containing slurry, which is prepared by dispersing a negative electrode mixture obtained by mixing a negative electrode active material, and a conductive aid and a binder as necessary, in a solvent, to a negative electrode current collector, followed by drying (removing the solvent) and pressing as necessary. It is possible to use, as such a solvent, a known solvent. Examples thereof include N-methyl-2-pyrrolidone, dimethylformamide, dimethylacetamide, water and the like.

<Positive Electrode>

In the nonaqueous secondary battery according to the present embodiment, the positive electrode can have a positive electrode active material layer on one or both sides of the positive electrode current collector.

[Positive Electrode Current Collector]

The positive electrode current collector is composed of, for example, a metal foil such as an aluminum foil, a nickel foil or a stainless steel foil. The surface of the positive electrode current collector may be coated with carbon, and may be processed into a mesh shape. The thickness of the positive electrode current collector is preferably 5 to 40 $\mu$m, more preferably 7 to 35 $\mu$m, and still more preferably 9 to 30 $\mu$m.

[Positive Electrode Active Material Layer]

The positive electrode active material layer contains a positive electrode active material, and may further contain a conductive aid and/or a binder as necessary.

(Positive Electrode Active Material)

The positive electrode active material layer preferably contains, as the positive electrode active material, a

material capable of occluding and releasing lithium ions. When such a material is used, it is possible to obtain high voltage and high energy density, which is preferable.

The positive electrode active material includes, for example, a positive electrode active material containing at least one transition metal element selected from the group consisting of Ni, Mn and Co, and is suitably at least one Li-containing metal oxide selected from Li-containing metal oxides represented by the following general formula (14):

$$Li_pNi_qCo_rMn_sMtO_u \qquad (14)$$

wherein M is at least one metal selected from the group consisting of Al, Sn, In, Fe, V, Cu, Mg, Ti, Zn, Mo, Zr, Sr and Ba, p, q, r, s, t and u are within the following ranges: $0 < p < 1.3$, $0 < q < 1.2$, $0 < r < 1.2$, $0 \leq s < 0.5$, $0 \leq t < 0.3$, $0.7 \leq q + r + s + t \leq 1.2$, and $1.8 < u < 2.2$, and p is the value determined by the charge-discharge state of the battery.

Examples of the positive electrode active material include:

lithium cobalt oxide typified by $LiCoO_2$ ;
lithium manganese oxide typified by $LiMnO_2$, $LiMn_2O_4$ and $Li_2Mn_2O_4$;
lithium nickel oxide typified by $LiNiO_2$;
lithium-containing composite metal oxide represented by $Li_zMO_2$, typified by $LiNi_{1/3}Co_{1/3}Mn_{1/3}O_2$, $LiNi_{0.5}Co_{0.2}Mn_{0.3}O_2$, $LiNi_{0.8}Co_{0.2}O_2$, $LiNi_{0.6}Co_{0.2}Mn_{0.2}O_2$, $LiNi_{0.75}Co_{0.15}Mn_{0.15}O_2$, $LiNi_{0.8}Co_{0.1}Mn_{0.1}O_2$, $LiNi_{0.85}Co_{0.075}Mn_{0.075}O_2$, $LiNi_{0.8}Co_{0.15}Al_{0.05}O_2$, $LiNi_{0.81}Co_{0.1}Al_{0.09}O_2$ and $LiNi_{0.85}Co_{0.1}Al_{0.05}O_2$(wherein M contains at least one transition metal element selected from the group consisting of Ni, Mn and Co and represents two or more metal elements selected from the group consisting of Ni, Mn, Co, Al, and Mg, and z represents a number of more than 0.9 and less than 1.2);
metal oxide or metal chalcogenide with tunnel and layered structures, typified by $MnO_2$, $FeO_2$, $FeS_2$, $V_2O_5$, $V_6O_{13}$, $TiO_2$, $TiS_2$, $MoS_2$ and $NbSe_2$ ;
sulfur;
conductive polymer typified by polyaniline, polythiophene, polyacetylene and polypyrrole; and the like.

In particular, when a Ni content ratio q of the Li-containing metal oxide represented by the general formula (14) satisfies $0.5 < q < 1.2$, it is preferable because both a reduction in the amount of Co, which is a rare metal, and higher energy density are achieved.

Here, as the Ni content ratio increases, deterioration tends to progress at a low voltage. The positive electrode active material of the lithium-containing metal oxide represented by the general formula (14) has an active site which causes oxidative deterioration of the nonaqueous electrolyte solution, and this active site sometimes unintentionally consumes a compound added to protect the negative electrode on the positive electrode side. Of these, an acid anhydride tends to be easily affected. In particular, when acetonitrile is contained as a nonaqueous solvent, because of great effect of adding the acid anhydride, the acid anhydride is consumed on the positive electrode side, which is a problem.

These additive decomposition products taken in and deposited on the positive electrode side not only increase the internal resistance of the nonaqueous secondary battery, but also accelerate deterioration of the lithium salt. Further, the protection of the negative electrode surface also becomes insufficient. In order to deactivate the active site which essentially causes oxidative deterioration of the nonaqueous electrolyte solution, it is preferable to control the Jahn-Teller strain or to coexist with a component which acts as a neutralizer. Therefore, the positive electrode active material preferably contains at least one metal selected from the group consisting of Al, Sn, In, Fe, V, Cu, Mg, Ti, Zn, Mo, Zr, Sr and Ba.

For the same reason, it is preferable that a surface of the positive electrode active material is coated with a compound containing at least one metal element selected from the group consisting of Zr, Ti, Al and Nb. It is more preferable that a surface of the positive electrode active material is coated with an oxide containing at least one metal element selected from the group consisting of Zr, Ti, Al and Nb. It is still more preferable that a surface of the positive electrode active material is coated with at least one oxide selected from the group consisting of $ZrO_2$, $TiO_2$, $Al_2O_3$, $NbO_3$ and $LiNbO_2$ because it does not inhibit the permeation of lithium ions.

The positive electrode active material may be a lithium-containing compound other than the lithium-containing metal oxide represented by the formula (14). Examples of such a lithium-containing compound include a composite oxide containing lithium and a transition metal element, a metal chalcogenide containing lithium, a metal phosphate compound containing lithium and a transition metal element, and a metal silicate compound containing lithium and a transition metal element. From the viewpoint of obtaining higher voltage, the lithium-containing compound is particularly preferably a metal phosphate compound containing lithium and at least one transition metal element selected from the group consisting of Co, Ni, Mn, Fe, Cu, Zn, Cr, V and Ti.

More specific examples include compounds each represented by the following formula (16a):

$$Li_vM^ID_2 \qquad (16a)$$

wherein D represents a chalcogen element, $M^I$ represents one or more transition metal elements containing at least one transition metal element, the value of v is determined by the charge/discharge state of the battery and represents a number of 0.05 to 1.10, and u represents an integer of 0 to 2,
the following formula (16b):

$$Li_wM^{II}PO_4 \qquad (16b)$$

wherein D represents a chalcogen element, $M^{II}$ represents one or more transition metal elements containing at least one transition metal element, the value of w is determined by the charge/discharge state of the battery and represents a number of 0.05 to 1.10, and u represents an integer of 0 to 2, and
the following formula (16c):

$$Li_tM^{III}{}_uSiO_4 \qquad (16c)$$

wherein D represents a chalcogen element, $M^{III}$ represents one or more transition metal elements containing at least one transition metal element, the value of t is determined by the charge/discharge state of the battery and represents a number of 0.05 to 1.10, and u represents an integer of 0 to 2.

The lithium-containing compound represented by the above formula (16a) has a layered structure, and the compounds represented by the above formulas (16b) and (16c) have an olivine structure. For the purpose of stabilizing the structure, these lithium-containing compounds may be those in which transition metal elements are partially substituted with Al, Mg or other transition metal elements, those in which these metal elements are included in grain boundaries, those in which oxygen atoms are partially substituted with a fluorine atom or the like, those in which a surface of the positive electrode active material is partially coated with other positive electrode active materials, and the like.

The positive electrode active material may be used alone, or in combination of two or more thereof. Since lithium ions can be occluded and released in a reversible and stable manner, and high energy density can be achieved, it is preferable that the positive electrode active material layer contains at least one transition metal element selected from Ni, Mn and Co.

When a lithium-containing compound and other positive electrode active materials are used in combination as the positive electrode active material, a ratio of both used is preferably 80% by weight or more, and more preferably 85% by weight or more, as the ratio of the lithium-containing compound used to the entire positive electrode active material used.

(Conductive Aid)

Examples of the conductive aid include carbon blacks typified by graphite, acetylene black and Ketjen black, and carbon fiber. The content of the conductive aid is preferably set at 10 parts by weight or less, and more preferably 1 to 5 parts by weight, as the amount per 100 parts by weight of the positive electrode active material.

(Binder)

Examples of the binder include polyvinylidene fluoride (PVDF), polytetrafluoroethylene (PTFE), polyacrylic acid, styrene-butadiene rubber and fluororubber. The content of the binder is preferably set at 6 parts by weight or less, and more preferably 0.5 to 4 parts by weight, as the amount per 100 parts by weight of the positive electrode active material.

[Formation of Positive Electrode Active Material Layer]

The positive electrode active material layer is formed by applying a positive electrode mixture-containing slurry, which is prepared by dispersing a positive electrode mixture obtained by mixing a positive electrode active material, and a conductive aid and a binder as necessary, in a solvent, to a positive electrode current collector, followed by drying (removing the solvent) and pressing as necessary. It is possible to use, as such a solvent, a known solvent. Examples thereof include N-methyl-2-pyrrolidone, dimethylformamide, dimethylacetamide, water and the like.

<Separator>

It is preferable that the nonaqueous secondary battery according to the present embodiment is provided with a separator between a positive electrode and a negative electrode from the viewpoint of preventing short circuits between

the positive electrode and the negative electrode and imparting safety such as shutdown. As the separator, the same one as which provided in a known nonaqueous secondary battery may be used, and an insulating thin film having high ionic permeability and excellent mechanical strength is preferable. Examples of the material constituting the separator include a woven fabric, a non-woven fabric, a microporous membrane made of a synthetic resin and the like. Of these, a microporous membrane made of a synthetic resin is preferable, and especially a polyolefin-based microporous membrane such as a microporous membrane containing polyethylene or polypropylene as a main component, or a microporous membrane containing both of these polyolefins is preferably used. Examples of the non-woven fabric include porous films made of heat-resistant resins such as glass, ceramic, polyolefin, polyester, polyamide, liquid crystal polyester and aramid.

The separator 170 may be formed by laminating a single layer or laminated from a plurality of layers of one type of microporous membrane, or laminated from a plurality of layers of two or more types of microporous membrane. The separator 170 may be formed by laminating a single layer or laminated from a mixed resin material obtained by melt-kneading two or more types of resin materials.

The thickness of the separator is preferably 1 μm or more from the viewpoint of the film strength, and preferably 500 μm or less from the viewpoint of permeability. From the viewpoint of relatively high calorific value and use for high output applications, and from the viewpoint of winding properties by a large battery winding machine, the thickness is preferably 3 μm or more and 40 μm or less, and more preferably 10 μm or more and 25 μm or less. When the achievement of both short-circuit resistance and output performance are emphasized, the thickness is more preferably 15 μm or more and 25 μm or less, but when the achievement of both high energy density and output performance are emphasized, the thickness is more preferably 10 μm or more and less than 15 μm.

The porosity is preferably 30% or more and 90% or less, more preferably 35% or more and 80% or less, and still more preferably 40% or more and 70% or less, from the viewpoint of following rapid movement of lithium ions at the time of high output. When priority is given to an improvement in output performance while ensuring the safety, the porosity is particularly preferably 50% or more and 70% or less, and when the achievement of both short-circuit resistance and output performance is emphasized, the porosity is particularly preferably 40% or more and less than 50%.

From the viewpoint of a balance between the thickness and the porosity, the air permeability is preferably 1 second/100 $cm^3$ or more and 400 seconds/100 $cm^3$ or less, and more preferably 100 seconds/100 $cm^3$ or more and 350 seconds/100 $cm^3$ or less. When the achievement of both short-circuit resistance and output performance is emphasized, the air permeability is preferably 150 seconds/100 $cm^3$ or more and 350 seconds/100 $cm^3$ or less, and when priority is given to an improvement in output performance while ensuring the safety, the air permeability is particularly preferably 100 seconds/100 $cm^3$ or more and less than 150 seconds/100 $cm^3$.

Meanwhile, when a nonaqueous electrolyte solution having low ionic conductivity and a separator within the above range are combined, the movement speed of lithium ions is not controlled by the structure of the separator, but high ionic conductivity of the nonaqueous electrolyte solution, thus failing to obtain expected input/output characteristics. Therefore, the ionic conductivity of the nonaqueous electrolyte solution is preferably 10 mS/cm or more, more preferably 15 mS/cm, and still more preferably 20 mS/cm.

However, each of thickness, air permeability and porosity of the separator, and the ionic conductivity of the nonaqueous electrolyte solution is an example.

Inorganic particles may be present on a surface layer or the inside of the separator for the purpose of imparting a predetermined function to the separator, and other organic layers may be further formed or laminated on the separator. The separator may have a crosslinked structure. In order to improve the safety performance of the nonaqueous secondary battery, these methods may be combined as necessary.

As mentioned above, in the present embodiment, it is possible to appropriately apply the elements described in the first embodiment to various elements for obtaining a nonaqueous secondary battery.

Therefore, it is possible to produce the nonaqueous secondary battery according to the present embodiment by appropriately applying the contents described in the first embodiment.

While embodiments for carrying out the present invention have been described above, the present invention is not limited to the above embodiments, and various modifications can be made without departing from the scope thereof.

## EXAMPLES

Hereinafter, the present invention will be described in more detail by way of Examples. However, the present invention is not limited to these Examples. Hereinafter, the first embodiment and the second embodiment will be described separately.

<First Example>

(1) Preparation of Nonaqueous Electrolyte Solution

In an inert atmosphere, various nonaqueous solvents, various acid anhydrides and various additives were mixed so as to have a predetermined concentration. Further, various lithium salts were added so as to have a predetermined concentration to prepare aqueous electrolyte solutions (S1) to (S29). The compositions of these nonaqueous electrolyte solutions are shown in Table 1 to Table 3.

Abbreviations of nonaqueous solvents, lithium salts, acid anhydrides and additives in Tables 1 to 3 have the following meanings, respectively. Percentage (%) by weight of each additive in Table 1 indicates % by weight based the total amount of the nonaqueous electrolyte solution.

(Nonaqueous Solvents)

AcN: acetonitrile
DEC: diethyl carbonate
EMC: ethyl methyl carbonate
DFA: 2,2-difluoroethyl acetate
DMC: dimethyl carbonate
EC: ethylene carbonate
VC: vinylene carbonate
FEC: 4-fluoro-1,3-dioxolan-2-one

(Lithium Salts)

$LiPF_6$: lithium hexafluorophosphate

LiFSI: lithium bis(fluorosulfonyl)imide ($LiN(SO_2F)_2$)

LiTFSI: lithium bis(trifluoromethylsulfonyl)imide ($LiN(SO_2CF_3)_2$)

(Additive: acid anhydride)

SAH: succinic anhydride

(Additives: compounds represented by the general formulas (1) to (4) and (18))

V0044: triethoxyvinylsilane

A0785: allyltriethoxysilane

T2675: triethoxy(3-glycidyloxypropyl)silane

T2523: 2,4,6,8-tetramethyl-2,4,6,8-tetravinylcyclotetrasiloxane

D0225: di-tert-butyl disulfide

BTESPTS: bis[3-(triethoxysilyl)propyl]tetrasulfide

PD: pyridine

MBTA: 1-methyl-1H-benzotriazole

[Table 1]

| Nonaqueous electrolyte solution | Nonaqueous solvent (% by volume) | | | | | | Lithium salt (mol/1 L solvent) | | | Acid anhydride (% by weight) | Additive | |
|---|---|---|---|---|---|---|---|---|---|---|---|---|
| | AcN | DEC | EMC | DMC | EC | VC | $LiPF_6$ | LiFSI | LiTFSI | SAH | Compound | (% by weight) |
| S1 | 49 | 28 | - | - | 21 | 2 | 0.3 | 1.0 | - | 0.2 | V0044 | 0.1 |
| S2 | 49 | - | 28 | - | 21 | 2 | 0.3 | 1.0 | - | 0.2 | A0785 | 0.1 |
| S3 | 49 | 28 | - | - | 21 | 2 | 0.3 | 1.0 | - | 0.2 | T2675 | 0.1 |
| S4 | 49 | 28 | - | - | 21 | 2 | 0.3 | 1.0 | - | 0.2 | T2523 | 0.1 |
| S5 | 49 | - | 12 | 16 | 21 | 2 | 0.3 | 1.0 | - | 0.2 | D0225 | 0.1 |
| S6 | 49 | 28 | - | - | 21 | 2 | 0.3 | 1.0 | - | 0.2 | BTESPTS | 0.25 |
| S7 | 49 | 28 | - | - | 21 | 2 | 0.3 | 1.0 | - | 0.2 | - | - |
| S8 | 81 | - | - | - | 17 | 2 | 0.8 | - | 0.3 | - | - | - |
| S9 | 49 | 28 | - | - | 21 | 2 | 0.3 | 1.0 | - | 0.2 | PD | 0.1 |
| S10 | 49 | 28 | - | - | 21 | 2 | 0.3 | 1.0 | - | 0.2 | MBTA | 0.25 |

[Table 2]

| Nonaqueous electrolyte solution | Nonaqueous solvent (% by volume) | | | | | | | Lithium salt (mol/1 L solvent) | | Additive | |
|---|---|---|---|---|---|---|---|---|---|---|---|
| | AcN | DEC | EMC | DFA | EC | VC | FEC | $LiPF_6$ | LiFSI | Compound | (% by weight) |
| S11 | 49 | 28 | - | - | 21 | 2 | - | 0.3 | 1.0 | T2523 | 0.25 |
| S12 | 48.3 | - | - | 25.4 | 23.8 | 2.5 | - | 0.3 | 1.0 | V0044 | 0.1 |
| S13 | 49 | - | - | 28 | 21 | 2 | - | 0.3 | 1.0 | V0044 | 0.1 |
| S14 | 48.5 | - | - | 28 | 21 | 2.5 | - | 0.3 | 1.0 | V0044 | 0.1 |
| S15 | 49 | - | - | 28 | 21 | 2 | - | 0.3 | 1.0 | V0044 | 0.5 |
| S16 | 48.5 | - | - | 28 | 21 | 2.5 | - | 0.3 | 1.0 | V0044 | 0.5 |
| S17 | 49 | 28 | - | - | 21 | 2 | - | 0.3 | 1.0 | V0044 | 0.1 |
| S18 | 49 | - | - | 28 | 21 | 1 | 1 | 0.3 | 1.0 | V0044 | 0.25 |
| S19 | 49 | 28 | - | - | 21 | 2 | - | 0.3 | 1.0 | V0044 | 0.5 |
| S20 | 48.5 | 28 | - | - | 21 | 2.5 | - | 0.3 | 1.0 | V0044 | 0.5 |
| S21 | - | - | 69 | - | 29 | 2 | - | 1 | - | - | - |
| S22 | 49 | 28 | - | - | 21 | 2 | - | 0.3 | 1.0 | - | - |
| S23 | 49 | 28 | - | - | 10 | 13 | - | 0.3 | 1.0 | - | - |

[Table 3]

| Nonaqueous electrolyte solution | Nonaqueous solvent (% by volume) | | | | | | | Lithium salt (mol/1 L solvent) | | Additive 1 | | Additive 2 | |
|---|---|---|---|---|---|---|---|---|---|---|---|---|---|
| | AcN | DEC | EMC | DFA | EC | VC | FEC | $LiPF_6$ | LiFSI | Compound | (% by weight) | Compound | (% by weight) |
| S24 | 49 | 28 | - | - | 21 | 2 | - | 0.3 | 1.0 | D0225 | 0.1 | - | - |
| S25 | 49 | 28 | - | - | 21 | 2 | - | 0.3 | 1.0 | BTESPTS | 0.1 | - | - |
| S26 | 49 | 28 | - | - | 21 | 2 | - | 0.3 | 1.0 | BTESPTS | 0.25 | - | - |
| S27 | 51.3 | - | - | 24.4 | 23.2 | 1.2 | - | 0.3 | 1.0 | V0044 | 0.15 | BTESPTS | 0.12 |
| S28 | 49.2 | - | - | 14.4 | 35.1 | 1.3 | - | 0.3 | 1.0 | V0044 | 0.55 | PES | 0.16 |
| S29 | 43.3 | - | - | 16.6 | 39.1 | 1.1 | - | 0.9 | 0.4 | V0044 | 0.6 | PES | 0.11 |

(2) Fabrication of Coin-Type Nonaqueous Secondary Battery

(2-1-1) Fabrication of Positive Electrode (P1)

A composite oxide of lithium having a number-average particle diameter of 11 μm, nickel, manganese and cobalt ($LiNi_{1/3}Mn_{1/3}Co_{1/3}O_2$, density of 4.70 g/cm$^3$) as the positive electrode active material (A), graphite powder having a number-average particle diameter of 6.5 μm (density of 2.26 g/cm$^3$) and acetylene black powder having a number-average particle diameter of 48 nm (density of 1.95 g/cm$^3$) as the conductive aids (B), and polyvinylidene fluoride (PVDF; density of 1.75 g/cm$^3$) as the binder (c) were mixed at a weight ratio of 92:4:4 to obtain a positive electrode mixture.

N-methyl-2-pyrrolidone as the solvent was added to the positive electrode mixture thus obtained so as to have a solid content of 68% by weight, followed by further mixing to prepare a positive electrode mixture-containing slurry. While adjusting the basis weight of the positive electrode mixture-containing slurry, the positive electrode mixture-containing slurry was coated on one side of an aluminum foil having a thickness of 15 μm and a width of 280 mm, which serves as a positive electrode current collector, using a 3-roll transfer coater so as to have a coating pattern having a width of 240 to 250 mm, a coating length of 125 mm and a non-coating length of 20 mm, and then the solvent was dried and removed in a hot air drying furnace. Both sides of the electrode roll thus obtained were subjected to trimming cut, followed by drying under reduced pressure at 130°C for 8 hours. Then, the electrode roll was rolled by a roll press so that the density of the positive electrode active material layer became 2.9 g/cm$^3$ to obtain a positive electrode (P1) composed of the positive electrode active material layer and the positive electrode current collector. The basis weight of the positive electrode active material layer was 23.8 mg/cm$^2$, and the weight of the positive electrode active material was 21.9 mg/cm$^2$.

(2-1-2) Fabrication of Positive Electrode (P2)

A composite oxide of lithium having a number-average particle diameter of 11 μm, nickel, cobalt and aluminum ($LiNi_{0.8}Co_{0.15}Al_{0.05}O_2$) as the positive electrode active material (A), graphite powder having a number-average particle diameter of 6.5 μm (density of 2.26 g/cm$^3$) and acetylene black powder having a number-average particle diameter of 48 nm (density of 1.95 g/cm$^3$) as the conductive aids (B), and polyvinylidene fluoride (PVDF; density of 1.75 g/cm$^3$) as the binder (c) were mixed at a weight ratio of 92:4:4 to obtain a positive electrode mixture.

N-methyl-2-pyrrolidone as the solvent was added to the positive electrode mixture thus obtained so as to have a solid content of 68% by weight, followed by further mixing to prepare a positive electrode mixture-containing slurry. While adjusting the basis weight of the positive electrode mixture-containing slurry, the positive electrode mixture-containing slurry was coated on one side of an aluminum foil having a thickness of 15 μm and a width of 280 mm, which serves as a positive electrode current collector, using a 3-roll transfer coater so as to have a coating pattern having a width of 240 to 250 mm, a coating length of 125 mm and a non-coating length of 20 mm, and then the solvent was dried and removed in a hot air drying furnace. Both sides of the electrode roll thus obtained were subjected to trimming cut, followed by drying under reduced pressure at 130°C for 8 hours. Then, the electrode roll was rolled by a roll press so that the density of the positive electrode active material layer became 2.9 g/cm$^3$ to obtain a positive electrode (P2) composed of the positive electrode active material layer and the positive electrode current collector. The basis weight of the positive electrode active material layer was 19.3 mg/cm$^2$, and the weight of the positive electrode active material was 17.8 mg/cm$^2$.

(2-1-3) Fabrication of Positive Electrode (P3)

An immersion liquid was fabricated by dissolving 5% by weight of bis[3-(triethoxysilyl)propyl]tetrasulfide in acetonitrile, and the positive electrode (P2) was immersed therein. Then, the positive electrode (P2) was taken out from the immersion liquid, air-dried for 30 minutes and vacuum-dried at 100°C for 12 hours. The positive electrode subjected to the above treatment was taken as a positive electrode (P3).

(2-1-4) Fabrication of Positive Electrode (P4)

A composite oxide of lithium, nickel, manganese and cobalt ($LiNi_{0.6}Mn_{0.2}Co_{0.2}O_2$) as the positive electrode active material (A), carbon black powder for battery (SUPER-P (registered trademark), manufactured by IMERYS Graphite & Carbon co.) as the conductive aid (B), and polyvinylidene fluoride (PVDF; density of 1.75 g/cm$^3$) as the binder (c) were mixed at a weight ratio of 94:3:3 to obtain a positive electrode mixture.

N-methyl-2-pyrrolidone as the solvent was added to the positive electrode mixture thus obtained so as to have a solid content of 68% by weight, followed by further mixing to prepare a positive electrode mixture-containing slurry. While adjusting the basis weight of the positive electrode mixture-containing slurry, the positive electrode mixture-containing slurry was coated on one side of an aluminum foil having a thickness of 20 μm and a width of 150 mm, which serves as a positive electrode current collector, using a 3-roll transfer coater so as to have a coating pattern having a width of 98 to 100 mm, a coating length of 200 mm and a non-coating length of 20 mm, and then the solvent was dried and removed in a hot air drying furnace. Both sides of the electrode roll thus obtained were subjected to trimming cut, followed by drying under reduced pressure at 130°C for 8 hours. Then, the electrode roll was rolled by a roll press so that the density of the positive electrode active material layer became 2.7 g/cm$^3$ to obtain a positive electrode (P2) composed of the positive electrode active material layer and the positive electrode current collector. The basis weight of the positive electrode active material layer was 10.0 mg/cm$^2$, and the weight of the positive electrode active material was 9.4 mg/cm$^2$.

(2-2-1) Fabrication of Negative Electrode (N1)

Artificial graphite powder having a number-average particle diameter of 12.7 μm (density of 2.23 g/cm$^3$) as the negative electrode active material (a), acetylene black powder having a number-average particle diameter of 48 nm (density of 1.95 g/cm$^3$) as the conductive aid (b), and a carboxymethyl cellulose (density of 1.60 g/cm$^3$) solution (solid component concentration of 1.83% by weight) and a diene-based rubber (glass transition temperature: -5°C, number-average particle size during drying: 120 nm, density of 1.00 g/cm$^3$, dispersion medium: water, solid component concentration of 40% by weight) as the binders (c) were mixed at a solid component weight ratio of 95.7:0.5:3.8 to obtain a negative electrode mixture.

Water as the solvent was added to the negative electrode mixture thus obtained so as to have a solid content of 45% by weight, followed by further mixing to prepare a negative electrode mixture-containing slurry. While adjusting the basis weight of the negative electrode mixture-containing slurry, the negative electrode mixture-containing slurry was coated on one side of a copper foil having a thickness of 8 μm and a width of 280 mm, which serves as a negative electrode current collector, using a 3-roll transfer coater so as to have a coating pattern having a width of 240 to 250 mm, a coating length of 125 mm and a non-coating length of 20 mm, and then the solvent was dried and removed in a hot air drying furnace. Both sides of the electrode roll thus obtained were subjected to trimming cut and dried under reduced pressure at 80°C for 12 hours. Then, the electrode roll was rolled by a roll press so that the density of the negative electrode active material layer became 1.5 g/cm$^3$ to obtain a negative electrode (N1) composed of the negative electrode active material layer and the negative electrode current collector. The basis weight of the negative electrode active material layer was 11.9 mg/cm$^2$, and the weight of the negative electrode active material was 11.4 mg/cm$^2$.

(2-2-2) Fabrication of Negative Electrode (N2)

Artificial graphite powder having a number-average particle diameter of 12.7 μm (density of 2.23 g/cm$^3$) as the negative electrode active material (a), carbon black powder for battery (SUPER-P (registered trademark), manufactured by IMERYS Graphite & Carbon) as the binder (c), and polyvinylidene fluoride (PVDF; density of 1.75 g/cm$^3$) as the binder (c) were mixed at a solid component weight ratio of 90.0:3.0:7.0 to obtain a negative electrode mixture.

Water as the solvent was added to the negative electrode mixture thus obtained so as to have a solid content of 45% by weight, followed by further mixing to prepare a negative electrode mixture-containing slurry. While adjusting the basis weight of the negative electrode mixture-containing slurry, the negative electrode mixture-containing slurry was coated on one side of a copper foil having a thickness of 8 μm and a width of 150 mm, which serves as a negative electrode current collector, using a 3-roll transfer coater so as to have a coating pattern having a width of 98 to 101 mm, a coating length of 200 mm and a non-coating length of 20 mm, and then the solvent was dried and removed in a hot air drying furnace. Both sides of the electrode roll thus obtained were subjected to trimming cut and dried under reduced pressure at 130°C for 8 hours. Then, the electrode roll was rolled by a roll press so that the density of the negative electrode active material layer became 1.3 g/cm$^3$ to obtain a negative electrode (N2) composed of the negative electrode active material layer and the negative electrode current collector. The basis weight excluding the negative electrode current collector was 5.4 mg/cm$^2$, and the weight of the negative electrode active material excluding the negative electrode current collector was 4.9 mg/cm$^2$.

(2-3) Assembling of Coin-Type Nonaqueous Secondary Battery

A polypropylene gasket was set in a CR2032 type battery casing (SUS304/Al-cladding), and the positive electrode (P1) obtained as mentioned above was punched in a disk shape having a diameter of 15.958 mm was set in the center of the gasket while the positive electrode active material layer faces upward. A glass fiber filter paper (GA-100, manufactured by Advantec Co., Ltd.) punched in a disk shape having a diameter of 16.156 mm was set therein, and 150 μL of an electrolyte solution was injected. Then, the negative electrode obtained as mentioned above was punched in a disk shape having a diameter of 16.156 mm was set therein while the negative electrode active material layer faces

downward. Further, a spacer and a spring were set, and a battery cap was fitted and crimped with a caulking machine. The overflowing electrolyte solution was wiped off with a waste cloth. After maintaining at a temperature of 25°C for 12 hours to fully adapt the electrolyte solution to the laminate, a coin-type nonaqueous secondary battery was thus obtained.

(3) Evaluation of Coin-Type Nonaqueous Secondary Battery (1 C = 6 mA)

For the coin-type nonaqueous secondary battery obtained as mentioned above, first, an initial charging treatment and the initial charging/discharging capacity measurement were carried out according to the following procedure (3-1).

Then, each coin-type nonaqueous secondary battery was evaluated according to the procedure (3-2) or (3-3). The charging/discharging was carried out using a charging/discharging apparatus ACD-M01A (trade name) manufactured by Aska Electronics Co., Ltd. and a program thermostatic bath IN804 (trade name) manufactured by Yamato Scientific Co., Ltd.

Here, "1 C" refers to the current value at which a fully charged battery is expected to be discharged in one hour with a constant current to terminate discharging.

(3-1) Initial Charging/Discharging Treatment of Coin-Type Nonaqueous Secondary Battery

After setting the ambient temperature of the coin-type nonaqueous secondary battery at 25°C and charging with a constant current of 0.6 mA corresponding to 0.1 C to reach 4.2 V, the battery was charged with a constant voltage of 4.2 V until the current attenuated to 0.12 mA corresponding to 0.02 C. Then, the battery was discharged to 3.0 V with a constant current of 1.8 mA corresponding to 0.3 C. The initial efficiency was calculated by dividing this initial discharging capacity by the initial charging capacity. The case where the initial efficiency when the positive electrode (P1) and the negative electrode (N1) are used is 84% or more was rated "Pass", and the subsequent evaluation can be carried out. Further, the initial discharging capacity at this time was defined as the initial capacity A.

(3-2) Full-Charge Storage Test at 85°C of Coin-Type Nonaqueous Secondary Battery

For the battery subjected to the initial charging/discharging treatment by the method mentioned in (3-1), the ambient temperature of the battery was set at 25°C, and after charging with a constant current of 6 mA corresponding to 1 C to reach 4.2 V, the battery was charged with a constant voltage of 4.2 V for 1.5 hours. Then, this coin-type nonaqueous secondary battery was stored in a thermostatic bath at 85°C for 4 hours. Thereafter, the ambient temperature was returned to 25°C, and the battery was discharged to 3.0 V with a current value of 1.8 mA corresponding to 0.3 C. The remaining discharging capacity at this time was defined as B. The remaining capacity retention rate was calculated based on the following formula as the measured value of the full-charge storage test at 85°C.

Remaining capacity retention rate = (0.3 C remaining discharging capacity B after full-charge storage at 85°C/0.3 C initial capacity A before full-charge storage test at 85°C) × 100 [%]

For the coin-type nonaqueous secondary battery subjected to the full-charge storage test at 85°C by the method mentioned above, the ambient temperature of the battery was set at 25°C, and after charging with a constant current of 6 mA corresponding to 1 C to reach 4.2 V, the battery was charged with a constant voltage of 4.2 V for 1.5 hours. The recovery discharging capacity at this time was defined as C. Then, the battery was discharged to 3.0 V with a current value of 1.8 mA corresponding to 0.3 C. The recovery discharging capacity at this time was defined as D. The discharging efficiency after recovery and the recovery capacity retention rate were calculated based on the following formulas as the recovery test measured values.

Charging and discharging efficiency after recovery = (0.3 C recovery discharging capacity D after full-charge storage test at 85°C/1 C recovery charging capacity C after full-charge storage test at 85°C) × 100 [%]

Recovery capacity retention rate = (0.3 C recovery discharging capacity D after full-charge storage test at 85°C/0.3 C initial capacity A before full-charge storage test at 85°C) × 100 [%]

(3-3) Cycle Test of Coin-Type Nonaqueous Secondary Battery

For the battery subjected to the accelerated deterioration treatment by the method mentioned in (3-2), a cycle test was carried out. In the cycle test, the ambient temperature of the battery was set at 25°C. After charging with a constant current of 9 mA corresponding to 1.5 C to reach 4.2 V, the battery was charged with a constant voltage of 4.2 V until the current attenuated to 0.3 mA corresponding to 0.05 C. Then, the battery was discharged to 3 V with a constant current of 9 mA. With this process of carrying out charging and discharging once each serving as one cycle, charging/discharging was carried out for 100 cycles. The discharge capacity in the 100th cycle when the discharge capacity in the 1st cycle was 100% was defined as the capacity retention rate.

(4) Evaluation of Coin-Type Nonaqueous Secondary Battery (1 C = 3 mA)

For the coin-type nonaqueous secondary battery obtained as mentioned above, first, an initial charging treatment and the initial charging/discharging capacity measurement were carried out according to the following procedure (4-1). Then, each coin-type nonaqueous secondary battery was evaluated according to the procedure (4-2) or (4-3). The charging/discharging was carried out using a charging/discharging apparatus ACD-M01A (trade name) manufactured by Aska Electronics Co., Ltd. and a program thermostatic bath IN804 (trade name) manufactured by Yamato Scientific Co., Ltd.

(4-1) Initial Charging/Discharging Treatment of Coin-Type Nonaqueous Secondary Battery

After setting the ambient temperature of the coin-type nonaqueous secondary battery at 25°C and charging with a constant current of 0.3 mA corresponding to 0.1 C to reach 4.2 V, the battery was charged with a constant voltage of 4.2 V until the current attenuated to 0.06 mA corresponding to 0.02 C. Then, the battery was discharged to 3.0 V with a constant current of 0.9 mA corresponding to 0.3 C. The initial efficiency was calculated by dividing this initial discharging capacity by the initial charging capacity. The case where the initial efficiency when the positive electrode (P4) and the negative electrode (N2) are used is 84% or more was rated "Pass", and the subsequent evaluation can be carried out. Further, the initial discharging capacity at this time was defined as the initial capacity A.

(4-2) Full-Charge Storage Test at 85°C of Coin-Type Nonaqueous Secondary Battery

For the battery subjected to the initial charging/discharging treatment by the method mentioned in (4-1), the ambient temperature of the battery was set at 25°C, and after charging with a constant current of 3 mA corresponding to 1 C to reach 4.2 V, the battery was charged with a constant voltage of 4.2 V for 1.5 hours. Then, this coin-type nonaqueous secondary battery was stored in a thermostatic bath at 85°C for 4 hours. Thereafter, the ambient temperature was returned to 25°C, and the battery was discharged to 3.0 V with a current value of 0.9 mA corresponding to 0.3 C. The remaining discharging capacity at this time was defined as B. The remaining capacity retention rate was calculated based on the following formula as the measured value of the full-charge storage test at 85°C.

Remaining capacity retention rate = (0.3 C remaining discharging capacity B after full-charge storage at 85°C/0.3 C initial capacity A before full-charge storage test at 85°C) × 100 [%]

For the coin-type nonaqueous secondary battery subjected to the full-charge storage test at 85°C by the method mentioned above, the ambient temperature of the battery was set at 25°C, and after charging with a constant current of 3 mA corresponding to 1 C to reach 4.2 V, the battery was charged with a constant voltage of 4.2 V for 1.5 hours. The recovery charging capacity at this time was defined as C. Then, the battery was discharged to 3.0 V with a current value of 0.9 mA corresponding to 0.3 C. The recovery discharging capacity at this time was defined as D. The discharging efficiency after recovery and the recovery capacity retention rate were calculated based on the following formulas as the recovery test measured values.

Charging/discharging efficiency after recovery = (0.3 C recovery discharging capacity D after full-charge storage test at 85°C/1 C recovery charging capacity C after full-charge storage test at 85°C) × 100 [%]

Recovery capacity retention rate = (0.3 C recovery discharging capacity D after full-charge storage test at 85°C/0.3 C initial capacity A before full-charge storage test at 85°C) × 100 [%]

(4-3) Cycle Test of Coin-Type Nonaqueous Secondary Battery

For the battery subjected to the accelerated deterioration treatment by the method mentioned in (4-2), a cycle test was carried out. In the cycle test, the ambient temperature of the battery was set at 25°C. After charging with a constant current of 9 mA corresponding to 3 C to reach 4.2 V, the battery was charged with a constant voltage of 4.2 V until the current attenuated to 0.06 mA corresponding to 0.02 C. Then, the battery was discharged to 3 V with a constant current of 9 mA corresponding to 3 C. With this process of carrying out charging and discharging once each serving as one cycle, charging/discharging was carried out for 100 cycles. The discharge capacity in the 100th cycle when the discharge capacity in the 1st cycle was 100% was defined as the capacity retention rate.

[Examples 1 to 6 and Comparative Examples 1 to 4]

Using the positive electrode (P1), the negative electrode (N1) and each nonaqueous electrolyte solution in Table 1, coin-type nonaqueous secondary batteries were fabricated according to the procedure (2), and then an initial charging/discharging treatment of each coin-type nonaqueous secondary battery was carried out according to the procedure (3-1). Since the initial efficiency of the coin-type nonaqueous secondary batteries of Examples 1 to 6, Comparative Example 1 and Comparative Example 4 exceeded the passing level of 84%, the subsequent evaluation could be performed. Then, each coin-type nonaqueous secondary battery was evaluated according to the procedure (3-2). These test results are shown in Table 4.

[Table 4]

| | | (3-1) Initial charging/discharging treatment | | | (3-2) Full-charge storage test at 85°C | | | | | |
|---|---|---|---|---|---|---|---|---|---|---|
| | Nonaqueous electrolyte solution | Initial charging capacity (mAh) | Initial discharging capacity (initial capacity A) (mAh) | Initial efficiency (%) | Remaining discharging capacity B (mAh) | Remaining capacity retention rate (%) | Recovery charging capacity C (mAh) | Recovery discharging capacity D (mAh) | Discharging efficiency after recovery (%) | Recovery capacity retention rate (%) |
| Example 1 | S1 | 7.53 | 6.57 | 87.2 | 6.16 | 93.7 | 6.51 | 6.48 | 99.6 | 98.6 |
| Example 2 | S2 | 7.53 | 6.55 | 87.0 | 6.12 | 93.4 | 6.47 | 6.45 | 99.7 | 98.4 |
| Example 3 | S3 | 7.59 | 6.60 | 86.9 | 6.17 | 93.5 | 6.52 | 6.49 | 99.5 | 98.4 |
| Example 4 | S4 | 7.55 | 6.58 | 87.1 | 6.18 | 93.9 | 6.49 | 6.46 | 99.5 | 98.3 |
| Example 5 | S5 | 7.69 | 6.50 | 84.6 | 5.94 | 91.4 | 6.42 | 6.38 | 99.5 | 98.2 |
| Example 6 | S6 | 7.67 | 6.61 | 86.2 | 6.05 | 91.5 | 6.52 | 6.49 | 99.5 | 98.1 |
| Comparative Example 1 | S7 | 7.54 | 6.55 | 86.9 | 5.98 | 91.2 | 6.41 | 6.37 | 99.3 | 97.2 |
| Comparative Example 2 | S8 | Abnormal capacity | - | - | - | - | - | - | - | - |
| Comparative Example 3 | S9 | - | - | - | - | - | - | - | - | - |
| Comparative Example 4 | S10 | 7.55 | 6.59 | 87.2 | 5.94 | 90.2 | 6.52 | 6.45 | 98.9 | 97.9 |

The results of a comparison between Examples 1 to 6 and Comparative Example 1 revealed that when using, as various additives having the effect of inhibiting the active site of the positive electrode active material which causes oxidative deterioration of the nonaqueous electrolyte solution, the compounds represented by the general formulas (1) to (4) and (18), the remaining capacity retention rate, the charging/discharging efficiency after recovery and the recovery capacity retention rate after the full-charge storage test at 85°C were improved compared with the case of using a nonaqueous electrolyte solution containing no additive.

The results of a comparison between Examples 1 to 6 and Comparative Example 4 revealed that when using the compounds represented by the general formulas (1) to (4) and (18), the high-temperature durability performance was excellent when compared with the case of using additives having another effect capable of using in combination with an acid anhydride. WO 2016/159117 describes that MBTA used in Comparative Example 4 is capable of inhibiting the formation of complex cations composed of transition metal and acetonitrile to exhibit excellent loading characteristics even in a nonaqueous electrolyte solution containing acetonitrile as a nonaqueous solvent, and capable of inhibiting an increase in internal resistance when repeating the charging/discharging cycle. However, the results of Comparative Example 4 did not reveal the effect of inhibiting the active site of the positive electrode active material which causes oxidative deterioration of the nonaqueous electrolyte solution.

Meanwhile, the coin-type nonaqueous secondary battery using the nonaqueous electrolyte solution (S8) of Comparative Example 2 showed an abnormal value in which the initial charging capacity exceeds the limit, leading to emergency stop of a charging/discharging device. When acetonitrile is contained as a nonaqueous solvent, it is preferable to enhance SEI on a surface of the negative electrode in order to inhibit reductive decomposition during initial charging. However, since the acid anhydride was not added, the reductive decomposition of acetonitrile easily proceeded.

The nonaqueous electrolyte solution (S9) of Comparative Example 3 turned blackish brown after the addition of the lithium salt. Therefore, continuation of the test was abandoned. JP H08(1996)-321312 A mentions that pyridine used as an additive for the nonaqueous electrolyte solution (S9) has the effect of improving storage characteristics. However, succinic anhydride added to enhance SEI on a surface of the negative electrode caused side reaction with the acid. From this result, it became clear that it is difficult to use the acid anhydride in combination with pyridine.

[Example 7]

Using the positive electrode (P3), the negative electrode (N1) and the nonaqueous electrolyte solution (S7) in Table 1, a coin-type nonaqueous secondary battery was fabricated according to the procedure (2). Then, the coin-type nonaqueous secondary battery was evaluated according to the procedure (3-3). These test results are shown in Table 5.

[Comparative Example 5]

According to the same procedure as in Example 7, except that the positive electrode (P2) was used as it is, the coin-type nonaqueous secondary battery was evaluated. These test results are shown in Table 5.

[Table 5]

| | Nonaqueous electrolyte solution | Positive electrode | Negative electrode | (3-3) Cycle test |
|---|---|---|---|---|
| | | | | Capacity retention rate (%) |
| Example 7 | S7 | P3 | N2 | 68.8 |
| Comparative Example 5 | S7 | P2 | N2 | 55.6 |

The results of a comparison between Example 7 and Comparative Example 5 revealed that when the compounds represented by the general formulas (1) to (4) and (18), as various additives having the effect of inhibiting the active site of the positive electrode active material which causes oxidative deterioration of the nonaqueous electrolyte solution, are directly brought into contact with the positive electrode, oxidative deterioration of succinic anhydride is inhibited compared with the case of using the positive electrode which is not contacted with these additives, and thus the cycle performance at 25°C was improved even after high-temperature storage.

[Examples 8 to 17 and Comparative Examples 6 to 8]

Using the positive electrode (P1), the negative electrode (N1) and each nonaqueous electrolyte solution in

Table 2, coin-type nonaqueous secondary batteries were fabricated according to the procedure (2), and then an initial charging/discharging treatment of each coin-type nonaqueous secondary battery was carried out according to the procedure (3-1). Since the initial efficiency of the coin-type nonaqueous secondary batteries of Examples 8 to 17 and Comparative Examples 6 to 8 exceeded the passing level of 84%, the subsequent evaluation could be carried out. Then, each coin-type nonaqueous secondary battery was evaluated according to the procedures (3-2) and (3-3). These test results are shown in Table 6.

[Table 6]

| | Nonaqueous electrolyte solution | (3-1) Initial charging/discharging treatment | (3-2) Full-charge storage test at 85°C | | | | | | (3-3) Cycle test |
|---|---|---|---|---|---|---|---|---|---|
| | | Initial discharging capacity (initial capacity A) (mAh) | Remaining discharging capacity B (mAh) | Remaining capacity retention rate (%) | Recovery charging capacity C (mAh) | Recovery discharging capacity D (mAh) | Discharging efficiency after recovery (%) | Recovery capacity retention rate (%) | Capacity retention rate (%) |
| Example 8 | S11 | 6.76 | 6.20 | 91.8 | 6.60 | 6.57 | 99.6 | 97.3 | 77.2 |
| Example 9 | S12 | 6.77 | 6.34 | 93.5 | 6.64 | 6.61 | 99.6 | 97.7 | 79.6 |
| Example 10 | S13 | 6.77 | 6.34 | 93.6 | 6.63 | 6.61 | 99.7 | 97.7 | 84.3 |
| Example 11 | S14 | 6.76 | 6.21 | 91.8 | 6.63 | 6.60 | 99.6 | 97.6 | 82.7 |
| Example 12 | S15 | 6.79 | 6.32 | 93.0 | 6.65 | 6.63 | 99.6 | 97.5 | 80.7 |
| Example 13 | S16 | 6.78 | 6.31 | 93.1 | 6.65 | 6.62 | 99.5 | 97.6 | 82.9 |
| Example 14 | S17 | 6.74 | 6.33 | 93.9 | 6.62 | 6.59 | 99.6 | 97.8 | 83.5 |
| Example 15 | S18 | 6.76 | 6.29 | 93.1 | 6.63 | 6.60 | 99.5 | 97.6 | 83.4 |
| Example 16 | S19 | 6.71 | 6.26 | 93.3 | 6.58 | 6.55 | 99.5 | 97.5 | 84.2 |
| Example 17 | S20 | 6.77 | 6.31 | 93.2 | 6.63 | 6.60 | 99.5 | 97.5 | 83.6 |
| Comparative Example 6 | S21 | 6.65 | 6.26 | 94.2 | 6.54 | 6.53 | 99.8 | 98.2 | 44.1 |
| Comparative Example 7 | S22 | 6.72 | 6.05 | 90.1 | 6.59 | 6.56 | 99.5 | 97.5 | 78.6 |
| Comparative Example 8 | S23 | 6.68 | 3.72 | 55.7 | 5.27 | 4.78 | 90.6 | 71.5 | 16.6 |

[Examples 18 to 23]

Using the positive electrode (P1), the negative electrode (N1) and each nonaqueous electrolyte solution in Table 3, coin-type nonaqueous secondary batteries were fabricated according to the procedure (2), and then an initial charging/discharging treatment of each coin-type nonaqueous secondary battery was carried out according to the procedure (3-1). Since the initial efficiency of the coin-type nonaqueous secondary batteries of Examples 18 to 23 and Comparative Examples 6 to 8 exceeded the passing level of 84%, the subsequent evaluation could be carried out. Then, each coin-type nonaqueous secondary battery was evaluated according to the procedure (3-3). These test results are shown in Table 7.

[Table 7]

| | Nonaqueous electrolyte solution | Positive electrode | Negative electrode | (3-3) Cycle test |
|---|---|---|---|---|
| | | | | Capacity retention rate (%) |
| Example 18 | S24 | P1 | N1 | 78.5 |
| Example 19 | S25 | P1 | N1 | 80.2 |
| Example 20 | S26 | P1 | N1 | 75.6 |
| Example 21 | S27 | P1 | N1 | 77.9 |
| Example 22 | S28 | P1 | N1 | 75.7 |
| Example 23 | S29 | P1 | N1 | 71.6 |

[Example 24]

Using the positive electrode (P4), the negative electrode (N2) and the nonaqueous electrolyte solution (S17) in Table 2, a coin-type nonaqueous secondary battery was fabricated according to the procedure (2), and then an initial charging/discharging treatment of the coin-type nonaqueous secondary battery was carried out according to the procedure (4-1). Since the initial efficiency of the coin-type nonaqueous secondary battery of Example 24 exceeded the passing level of 84%, the subsequent evaluation could be carried out. Then, each coin-type nonaqueous secondary battery was evaluated according to the procedures (4-2) and (4-3). These test results are shown in Table 8.

[Table 8]

| | Nonaqueous electrolyte solution | (4-1) Initial charging/ discharging treatment | (4-2) Full-charge storage test at 85°C | | | | | | (4-3) Cycle test |
|---|---|---|---|---|---|---|---|---|---|
| | | Initial discharging capacity (initial capacity A) (mAh) | Remaining discharging capacity B (mAh) | Remaining capacity retention rate (%) | Recovery charging capacity C (mAh) | Recovery discharging capacity D (mAh) | Discharging efficiency after recovery (%) | Recovery capacity retention rate (%) | Capacity retention rate (%) |
| Example 24 | S17 | 3.15 | 2.85 | 90.6 | 3.10 | 3.09 | 99.8 | 98.3 | 95.1 |

<Second Example>

(5) Fabrication of Single-Layered Laminate Type Nonaqueous Secondary Battery

(5-1-1) Fabrication of Positive Electrode (P11)

A composite oxide of lithium, nickel, manganese and cobalt ($LiNi_{0.8}Mn_{0.1}Co_{0.1}O_2$) as the positive electrode active material (A), acetylene black powder having a number-average particle size of 48 nm (density of 1.95 g/cm$^3$) as the conductive aid (B), and polyvinylidene fluoride (PVDF; density of 1.75 g/cm$^3$) as the binder (c) were mixed at a weight ratio of 92:4:4 to obtain a positive electrode mixture.

N-methyl-2-pyrrolidone was added as the solvent to the positive electrode mixture thus obtained, followed by mixing to prepare a positive electrode mixture-containing slurry. This positive electrode mixture-containing slurry was coated on one side of an aluminum foil having a thickness of 20 $\mu$m, which will serve as a positive electrode current collector, while adjusting the basis weight of the positive electrode mixture-containing slurry. When the positive electrode mixture-containing slurry was coated on the aluminum foil, an uncoated region was formed so that a part of the aluminum foil was exposed. Both sides of the electrode roll thus obtained were subjected to trimming cut, followed by drying under reduced pressure at 130°C for 8 hours. Then, the electrode roll was rolled by a roll press so that the density of the positive electrode active material layer became 2.8 g/cm$^3$ to obtain a positive electrode (P11) composed of the positive electrode active material layer and the positive electrode current collector. The basis weight of the positive electrode active material layer was 18.1 mg/cm$^2$, and the weight of the positive electrode active material was 16.7 mg/cm$^2$.

Then, this positive electrode was cut such that the positive electrode mixture layer had an area of 14 mm × 20 mm and included the exposed portion of the aluminum foil. A lead piece formed of aluminum for extracting a current was welded to the exposed portion of the aluminum foil, and vacuum drying was carried out for at 120°C for 12 hours to obtain a lead-attached positive electrode.

(5-1-2) Fabrication of Positive Electrode (P12)

A composite oxide of lithium, nickel, manganese and cobalt ($LiNi_{0.6}Mn_{0.2}Co_{0.2}O_2$) as the positive electrode active material (A), acetylene black powder having a number-average particle size of 48 nm (density of 1.95 g/cm$^3$) as the conductive aid (B), and polyvinylidene fluoride (PVDF; density of 1.75 g/cm$^3$) as the binder (c) were mixed at a weight ratio of 93:4:3 to obtain a positive electrode mixture.

N-methyl-2-pyrrolidone was added as the solvent to the positive electrode mixture thus obtained, followed by mixing to prepare a positive electrode mixture-containing slurry. This positive electrode mixture-containing slurry was coated on one side of an aluminum foil having a thickness of 20 $\mu$m, which will serve as a positive electrode current collector, while adjusting the basis weight of the positive electrode mixture-containing slurry. When the positive electrode mixture-containing slurry was coated on the aluminum foil, an uncoated region was formed so that a part of the aluminum foil was exposed. Both sides of the electrode roll thus obtained were subjected to trimming cut, followed by drying under reduced pressure at 130°C for 8 hours. Then, the electrode roll was rolled by a roll press so that the density of the positive electrode active material layer became 2.9 g/cm$^3$ to obtain a positive electrode (P12) composed of the positive electrode active material layer and the positive electrode current collector. The basis weight of the positive electrode active material layer was 19.0 mg/cm$^2$, and the weight of the positive electrode active material was 17.7 mg/cm$^2$.

Then, this positive electrode was cut such that the positive electrode mixture layer had an area of 14 mm × 20 mm and included the exposed portion of the aluminum foil. A lead piece formed of aluminum for extracting a current was welded to the exposed portion of the aluminum foil, and vacuum drying was carried out for at 120°C for 12 hours to obtain a lead-attached positive electrode.

(5-1-3) Fabrication of Positive Electrode (P13)

An immersion liquid was fabricated by dissolving 5% by weight of bis[3-(triethoxysilyl)propyl]tetrasulfide in acetonitrile, and the positive electrode (P11) was immersed therein. Then, the positive electrode (P11) was taken out from the immersion liquid, air-dried for 30 minutes and vacuum-dried at 100°C for 12 hours. The positive electrode subjected to the above treatment was taken as a positive electrode (P13).

(5-2-1) Fabrication of Negative Electrode (N11)

Artificial graphite powder as the negative electrode active material (a), acetylene black powder having a number-average particle size of 48 nm (density of 1.95 g/cm$^3$) as the conductive aid (b), and polyvinylidene fluoride (PVDF; density of 1.75 g/cm$^3$) as the binder (c) were mixed at a solid component weight ratio of 93:2:5 to obtain a negative

electrode mixture.

N-methyl-2-pyrrolidone was added as the solvent to the negative electrode mixture thus obtained, followed by mixing to prepare a negative electrode mixture-containing slurry. This negative electrode mixture-containing slurry was coated on one side of a copper foil having a thickness of 10 μm, which will serve as a negative electrode current collector, while adjusting the basis weight of the negative electrode mixture-containing slurry. When the negative electrode mixture-containing slurry was coated on the copper foil, an uncoated region was formed so that a part of the copper foil was exposed. Both sides of the electrode roll thus obtained were subjected to trimming cut, followed by drying under reduced pressure at 130°C for 8 hours. Then, the electrode roll was rolled by a roll press so that the density of the negative electrode active material layer became 1.5 g/cm$^3$ to obtain a negative electrode (N11) composed of the negative electrode active material layer and the negative electrode current collector. The basis weight of the negative electrode active material layer was 11.8 mg/cm$^2$, and the weight of the negative electrode active material was 11.0 mg/cm$^2$.

Then, this negative electrode was cut such that the negative electrode mixture layer had an area of 15 mm × 21 mm and included the exposed portion of the copper foil. A lead piece formed of aluminum for extracting a current was welded to the exposed portion of the copper foil, and vacuum drying was carried out for at 80°C for 12 hours to obtain a lead-attached negative electrode.

(5-2-2) Fabrication of Negative Electrode (N12)

Artificial graphite powder as the negative electrode active material (a), acetylene black powder having a number-average particle diameter of 48 nm (density of 1.95 g/cm$^3$) as the conductive aid (b), and a carboxymethyl cellulose (density of 1.60 g/cm$^3$) solution (solid component concentration of 1.83% by weight) and a diene-based rubber (glass transition temperature: -5°C, number-average particle size during drying: 120 nm, density of 1.00 g/cm$^3$, dispersion medium: water, solid component concentration of 40% by weight) as the binders (c) were mixed at a solid component weight ratio of 97.5:1.0:1.5 to obtain a negative electrode mixture.

Water as the solvent was added to the negative electrode mixture thus obtained so as to have a solid content of 45% by weight, followed by further mixing to prepare a negative electrode mixture-containing slurry. While adjusting the basis weight of the negative electrode mixture-containing slurry, the negative electrode mixture-containing slurry was coated on one side of a copper foil having a thickness of 8 μm, which serves as a negative electrode current collector, and then the solvent was dried and removed in a hot air drying furnace. When the negative electrode mixture-containing slurry was coated on the copper foil, an uncoated region was formed so that a part of the copper foil was exposed. Both sides of the electrode roll thus obtained were subjected to trimming cut and dried under reduced pressure at 80°C for 12 hours. Then, the electrode roll was rolled by a roll press so that the density of the negative electrode active material layer became 1.45 g/cm$^3$ to obtain a negative electrode (N12) composed of the negative electrode active material layer and the negative electrode current collector. The basis weight of the negative electrode active material layer was 10.6 mg/cm$^2$, and the weight of the negative electrode active material was 10.3 mg/cm$^2$.

Then, this negative electrode was cut such that the negative electrode mixture layer had an area of 15 mm × 21 mm and included the exposed portion of the copper foil. A lead piece formed of aluminum for extracting a current was welded to the exposed portion of the copper foil, and vacuum drying was carried out for at 80°C for 12 hours to obtain a lead-attached negative electrode.

(5-3) Assembling of Single-Layered Laminate Type Nonaqueous Secondary Battery

The lead-attached positive electrode and the lead-attached negative electrode were overlapped by interposing a polyethylene microporous membrane separator (thickness of 21 μm, air permeability of 285 seconds/100 cm$^3$, porosity of 41%) while the mixture coated surfaces of each electrode face each other to fabricate a laminated electrode structure. This laminated electrode structure was housed in an aluminum laminated sheet outer package body of 100 mm × 60 mm, and vacuum drying was carried out at 80°C for 5 hours in order to remove moisture. Subsequently, an electrolyte solution was injected into an outer package body and the outer package body was sealed to fabricate a single-layered laminate type (pouch type) nonaqueous secondary battery (hereinafter also simply referred to as "single-layered laminate battery").

The single-layered laminate battery has a design capacity value of 7.5 mAh and a rated voltage value of 4.2 V.

(6) Evaluation of Single-Layered Laminate Type Nonaqueous Secondary Battery

The single-layered laminate type nonaqueous secondary battery obtained as mentioned above was first subjected to the initial charging/discharging treatment according to the following procedure (6-1). Then, according to the following procedure (6-2), each single-layered laminate type nonaqueous secondary battery was evaluated.

(6-1) Initial Charging/Discharging Treatment of Single-Layered Laminate Type Nonaqueous Secondary Battery

The ambient temperature of the single-layered laminate type nonaqueous secondary battery was set at 25°C, and the battery was charged with a constant current of 0.19 mA corresponding to 0.025 C for 2 hours. After resting for 3 hours, the battery was charged with a constant current of 0.38 mA corresponding to 0.05 C to reach 4.2 V and then charged with a constant voltage of 4.2 V until the current attenuated to 0.15 mA corresponding to 0.02 C. Then, the battery was discharged to 2.7 V with a constant current of 0.38 mA corresponding to 0.05 C.

(6-2) Cycle Test 1 at 50°C of Single-Layered Laminate Type Nonaqueous Secondary Battery

For the single-layered laminate type nonaqueous secondary battery subjected to the initial charging/discharging treatment by the method mentioned in (6-1), the ambient temperature of the battery was set at 50°C. After charging with a constant current of 3.8 mA corresponding to 0.5 C to reach 4.2 V, the battery was charged with a constant voltage of 4.2 V for a total of 3 hours. Then, the battery was discharged to 2.7 V with a constant current of 3.8 mA corresponding to 0.5 C. With this process of carrying out charging and discharging once each serving as one cycle, charging/discharging was carried out for 100 cycles. The discharge capacity in the 100th cycle when the discharge capacity in the 1st cycle was 100% was defined as the capacity retention rate.

(6-3) Cycle Test at 35°C of Single-Layered Laminate Type Nonaqueous Secondary Battery

For the single-layered laminate type nonaqueous secondary battery subjected to the initial charging/discharging treatment by the method mentioned in (6-1), the ambient temperature of the battery was set at 35°C. After charging with a constant current of 3.8 mA corresponding to 0.5 C to reach 4.2 V, the battery was charged with a constant voltage of 4.2 V for a total of 3 hours. Then, the battery was discharged to 2.7 V with a constant current of 3.8 mA. With this process of carrying out charging and discharging once each serving as one cycle, charging/discharging was carried out for 50 cycles. The discharge capacity in the 50th cycle when the discharge capacity in the 1st cycle was 100% was defined as the capacity retention rate.

(6-4) Cycle Test 2 at 50°C of Single-Layered Laminate Type Nonaqueous Secondary Battery

For the single-layered laminate type nonaqueous secondary battery subjected to the initial charging/discharging treatment by the method mentioned in (6-1), the ambient temperature of the battery was set at 50°C. After charging with a constant current of 3.8 mA corresponding to 0.5 C to reach 4.2 V, the battery was charged with a constant voltage of 4.2 V for a total of 3 hours. Then, the battery was discharged to 2.7 V with a constant current of 3.8 mA corresponding to 0.5 C. With this process of carrying out charging and discharging once each serving as one cycle, charging/discharging was carried out for 50 cycles. The discharge capacity in the 50th cycle when the discharge capacity in the 1st cycle was 100% was defined as the capacity retention rate.

[Comparative Example 9]

Using the positive electrode (P11), the negative electrode (N11) and the nonaqueous electrolyte solution (S10) in Table 1, a single-layered laminate type nonaqueous secondary battery was fabricated according to the procedure (5), and then an initial charging/discharging treatment of the single-layered laminate type nonaqueous secondary battery was carried out according to the procedure (6-1). Since the initial efficiency of the coin-type nonaqueous secondary battery of Comparative Example 9 exceeded the passing level of 84%, the subsequent evaluation could be carried out. Then, the single-layered laminate type nonaqueous secondary battery was evaluated according to the procedure (6-2). The discharging capacity at 100th cycle was 12%.

After completion of the cycle test, the single-layered laminate type nonaqueous secondary battery was disassembled in an argon atmosphere, and the positive electrode and the negative electrode were taken out, washed with diethyl carbonate and then dried.

In an argon atmosphere, the positive electrode and negative electrode were each placed in a glass screw tube. Using a syringe, 1 mL of heavy water was injected into each glass screw tube, which was sealed with a lid. After allowing to stand for 72 hours, the electrode film was extracted and cotton plug filtration was carried out by a Pasteur pipette filled with glass wool to obtain an extract.

The above extract was further diluted 10-fold with distilled water and centrifuged (12,000 rpm, 15 minutes) to remove solids, and LC-MS measurement was carried out.

A measuring device used was a UPLC type liquid chromatograph manufactured by Japan Waters Corp. connected to a SYNAPT G2 type mass spectrometer manufactured by Japan Waters Corp. As a column, ACQUITY UPLC

BEH C18 (1.7 μm, 2.1 mm × 50 mm) manufactured by Japan Waters Corp. was used. The column temperature was 40°C and the flow rate was 0.3 mL per minute. A photodiode array (200 to 400 nm) was used as a detector. For a mobile phase, water containing 0.1% by volume of formic acid was used as an A phase, and acetonitrile containing 0.1% by volume of formic acid was used as a B phase, and gradient elution was carried out as shown in Table 9. The injection amount of the sample was set at 2 μL.

[Table 9]

| | Time/min | A phase (% by volume) | B phase (% by volume) |
|---|---|---|---|
| Gradient | 0 | 98 | 2 |
| | 10 | 0 | 100 |
| | 10.1 | 98 | 2 |
| | 15 | 98 | 2 |

In the mass spectrometer, the electrospray ionization method (ESI+ and ESI-) was used for ionization. The m/z scan range was set at 50 to 1,200.

Table 10 below shows the LC-MS results of the extract in Comparative Example 9. The peak area (X) per 1 μg of the active material was calculated by the following formula.

X = {(measured value of peak area [Area]) × (amount of diluted extract [mL])/(injection amount of LC-MS [μL])}/{(mass (mg) of active material layer excluding current collector) × (active material ratio)}

[Table 10]

| | Electrode type | Electrode area ($cm^2$) | Electrode mass (mg) | Electrode mass excluding current collector (mg) | Amount of heavy water (mL) | Ratio of dilution with distilled water of extract (times) | Amount of diluted extract (mL) | LC-MS injection amount (μL) | Mass chromatogram ESI-(m/z 117.02) | | |
|---|---|---|---|---|---|---|---|---|---|---|---|
| | | | | | | | | | Peak area (Area) | Peak area per unit area (Area/$cm^2$) | Peak area per 1 μg of active material (X) (Area/μg) |
| Comparative Example 9 | Positive electrode | 2.72 | 64.0 | 49.2 | 1 | 10 | 10 | 2 | 1977.4 | 726.1 | 218.0 |
| | Negative electrode | 3.35 | 69.4 | 39.4 | 1 | 10 | 10 | 2 | 1819.7 | 543.8 | 247.8 |

As shown in Table 10, in Comparative Example 9, a compound having a molecular weight of 117 was detected in ESI- from the results of LC-MS measurement. The peak area per unit area was larger in the positive electrode than in the negative electrode, which suggested that succinic anhydride added to enhance SEI on a surface of the negative electrode was more consumed on the positive electrode side. Further, the peak area per 1 μg of the negative electrode active material greatly exceeded 200 Area/μg, which exerts an influence as a resistance component.

[Examples 25 to 28 and Comparative Example 10]

Using the positive electrode (P11), the positive electrode (P13), the negative electrode (N11) and each nonaqueous electrolyte solution in Table 11, single-layered laminate type nonaqueous secondary batteries were fabricated according to the procedure (5), and then an initial charging/discharging treatment of the single-layered laminate type nonaqueous secondary batteries was carried out according to the procedure (6-1). Since the initial efficiency of the coin-type nonaqueous secondary batteries of Examples 25 to 28 and Comparative Example 10 exceeded the passing level of 84%, the subsequent evaluation could be carried out. Then, the single-layered laminate type nonaqueous secondary batteries were evaluated according to the procedure (6-3). These test results are shown in Table 12.

[Table 11]

| Nonaqueous electrolyte solution | Nonaqueous solvent (% by volume) | | | | Lithium salt (mol/1 L solvent) | | Additive 1 | | Additive 2 | |
|---|---|---|---|---|---|---|---|---|---|---|
| | AcN | DEC | EC | VC | $LiPF_6$ | LiFSI | Compound | (% by weight) | Compound | (% by weight) |
| S30 | 49 | 28 | 21 | 2 | 0.3 | 1 | V0044 | 0.5 | SAH | 0.2 |
| S31 | 47 | 28 | 21 | 4 | 0.3 | 1 | V0044 | 0.5 | SAH | 0.14 |
| S32 | 47 | 28 | 21 | 4 | 0.3 | 1 | V0044 | 0.5 | - | - |
| S33 | 49 | 28 | 21 | 2 | 0.3 | 1 | - | - | - | - |
| S34 | 47 | 28 | 21 | 4 | 0.3 | 1 | - | - | - | - |

[Table 12]

| | Nonaqueous electrolyte solution | Positive electrode | Negative electrode | (6-3) Cycle test |
|---|---|---|---|---|
| | | | | Capacity retention rate (%) |
| Example 25 | S30 | P11 | N11 | 76 |
| Example 26 | S31 | P11 | N11 | 80 |
| Example 27 | S32 | P11 | N11 | 89 |
| Example 28 | S33 | P13 | N11 | 70 |
| Comparative Example 10 | S34 | P11 | N11 | 65 |

After completion of the cycle test, the single-layered laminate type nonaqueous secondary battery of Example 27 showing the highest cycle performance was disassembled in an argon atmosphere, and the positive electrode and the negative electrode were taken out, washed with diethyl carbonate and then dried.

In an argon atmosphere, the positive electrode and negative electrode were each placed in a glass screw tube. Using a syringe, 1 mL of heavy water was injected into each glass screw tube, which was sealed with a lid. After allowing to stand for 72 hours, the electrode film was extracted and cotton plug filtration was carried out by a Pasteur pipette filled with glass wool to obtain an extract.

The extract thus obtained was charged in an NMR tube having a diameter of 3 mm and sealed. Separately, tetrafluorobenzene (manufactured by Tokyo Chemical Industry Co., Ltd.) as a reference material was dissolved in deuterated chloroform (manufactured by Sigma-Aldrich) containing tetramethylsilane as a chemical shift standard, and

the solution thus obtained was charged in an NMR tube having a diameter of 5 mm. The NMR tube having a diameter of 3 mm was inserted into this NMR tube, and $^1H$-NMR measurement was carried out by the double tube method. A heavy water solution of dimethyl sulfoxide (concentration of 0.398 mg/mL) was prepared as a reference material for quantification, and $^1H$-NMR measurement was carried out in the same manner.

As the measuring device, a JNM-ECS-400 type FT NMR device manufactured by JEOL RESONANCE Inc. was used. Deuterated chloroform was used as the lock solvent, the number of integrations was set at 256, and tetramethylsilane (0 ppm) was used as the chemical shift criteria. In the quantitative calculation, the integral value of the peak attributable to the proton of tetrafluorobenzene is set at 2,000, and the integral value corresponding to one proton per unit concentration was determined from the integral value of the signal of dimethyl sulfoxide, which is a reference material, and then the concentration in the extract from the integrated value of each peak was calculated using the value. Table 13 below shows $^1H$-NMR results of the positive electrode and negative electrode extracts in Example 27.

[Table 13]

| Positive electrode | Electrode weight (mg) | Electrode weight A excluding current collector (mg) | Active material ratio B (%) | Amount C of heavy water (mL) | Molecular weight | Number of intramolecular protons | Integration ratio | Molar ratio (integration ratio/proton number) | Weight ratio (molecular weight × molar ratio) | Concentration D in extract (μg/mL) | Concentration of negative electrode protective film component (mg/g) |
|---|---|---|---|---|---|---|---|---|---|---|---|
| $CH_3OCOOLi$ | 62.0 | 47.8 | 92 | 1 | 81.08 | 3 | 0 | 0 | 0 | 0 | 0 |
| $CH_3CH_2OCOOLi$ | 62.0 | 47.8 | 92 | 1 | 96.01 | 3 | 2.94 | 0.98 | 94.09 | 52.60 | 1.1973 |
| $LiOCOOCH_2CH_2OCOOLi$ | 62.0 | 47.8 | 92 | 1 | 161.95 | 4 | 1.88 | 0.47 | 76.12 | 42.50 | 0.9674 |
| | | | | | | | | | | Total | 2.1647 |
| Negative electrode | Electrode weight (mg) | Electrode weight A excluding current collector (mg) | Active material ratio B (%) | Amount C of heavy water (mL) | Molecular weight | Number of intramolecular protons | Integration ratio | Molar ratio (integration ratio/proton number) | Weight ratio (molecular weight × molar ratio) | Concentration D in extract (μg/mL) | Concentration of negative electrode protective film component (mg/g) |
| $CH_3OCOOLi$ | 68.8 | 39.1 | 93 | 1 | 81.08 | 3 | 1.31 | 0.44 | 35.40 | 20.00 | 0.5494 |
| $CH_3CH_2OCOOLi$ | 68.8 | 39.1 | 93 | 1 | 96.01 | 3 | 7.44 | 2.48 | 238.10 | 133.00 | 3.6535 |
| $LiOCOOCH_2CH_2OCOOLi$ | 68.8 | 39.1 | 93 | 1 | 161.95 | 4 | 12.3 | 3.08 | 498.8 | 278.30 | 7.6448 |
| | | | | | | | | | | Total | 11.8477 |

As shown in Table 13, from the results of $^1$H-NMR measurement, the compounds represented by the general formulas (4A) to (6A) were confirmed in Example 27.

[Examples 29 and 30]

Using the positive electrode (P12), the negative electrode (N12) and each nonaqueous electrolyte solution in Table 11, single-layered laminate type nonaqueous secondary batteries were fabricated according to the procedure (5), and then an initial charging/discharging treatment of the single-layered laminate type nonaqueous secondary batteries was carried out according to the procedure (6-1). Since the initial efficiency of the coin-type nonaqueous secondary batteries of Examples 29 and 30 exceeded the passing level of 84%, the subsequent evaluation could be carried out. Then, the single-layered laminate type nonaqueous secondary batteries were evaluated according to the procedure (6-4). These test results are shown in Table 14.

[Table 14]

| | Nonaqueous electrolyte solution | Positive electrode | Negative electrode | (6-4) Cycle test |
|---|---|---|---|---|
| | | | | Capacity retention rate (%) |
| Example 29 | S30 | P12 | N12 | 87 |
| Example 30 | S32 | P12 | N12 | 86 |

From the above results, the nonaqueous secondary battery according to the present embodiment is capable of effectively inhibiting the active site of the positive electrode active material which causes oxidative deterioration of the nonaqueous electrolyte solution while maintaining the internal resistance to a low level, thus making it possible to inhibit the deterioration phenomenon when stored at a high temperature.

## INDUSTRIAL APPLICABILITY

The nonaqueous electrolyte solution and the nonaqueous secondary battery of the present invention are expected to be used as, for example, batteries for mobile devices such as a mobile phone, a mobile audio device, a personal computer and an integrated circuit (IC) tag; automotive batteries for a hybrid car, a plug-in hybrid car, an electric car, etc.; low voltage power sources such as 12V, 24V and 48V class power sources; and residential power storage systems, IoT devices, etc. The nonaqueous secondary battery of the present invention can also be applied to cold weather applications and outdoor applications in the summer.

## REFERENCE SIGNS LIST

100: Nonaqueous secondary battery
110: Battery outer package
120: Space of battery outer package 110
130: Positive electrode lead body
140: Negative electrode lead body
150: Positive electrode
160: Negative electrode
170: Separator

## Claims

1. A nonaqueous electrolyte solution comprising a nonaqueous solvent, a lithium salt, and at least one compound selected from the group consisting of compounds represented by the following general formula (1):

$$R^1\text{-}(S)_n\text{-}R^2 \qquad (1)$$

wherein $R^1$ and $R^2$ represent an alkyl group which may be substituted with an aryl group or an alkoxysilyl group, or

an aryl group which may be substituted with an alkyl group or an alkoxysilyl group, and n is an integer of 1 to 4; the following general formula (2):

$$X\text{-}Si(OR^3)_{(3-m)}R^4_m \qquad (2)$$

wherein $R^3$ and $R^4$ represent an alkyl group which may be substituted with an aryl group or an alkoxysilyl group or a halogen atom, or an aryl group which may be substituted with an alkyl group or an alkoxysilyl group or a halogen atom, and X represents at least one selected from the group consisting of groups represented by the following formula (5):

[Chemical Formula 1]

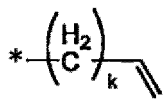

...... (5)

wherein k is an integer of 0 to 8 and * represents a binding site to Si,
the following formula (6):

[Chemical Formula 2]

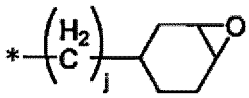

...... (6)

wherein j is an integer of 0 to 8 and * represents a binding site to Si,
the following formula (7):

[Chemical Formula 3]

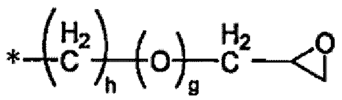

...... (7)

wherein h is an integer of 0 to 8, g is an integer of 0 or 1, and * represents a binding site to Si,
and
the following formula (17):

[Chemical Formula 4]

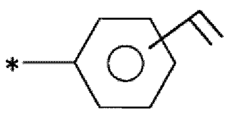

...... (17)

wherein * represents a binding site to Si, and m is an integer of 0 to 2;
the following general formula (3):

[Chemical Formula 5]

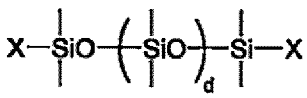

..... (3)

wherein X each independently represents at least one selected from groups represented by the formulas (5) to (7) and (17) and d is an integer of 0 to 10,000;
the following general formula (4):

[Chemical Formula 6]

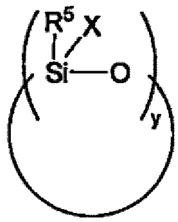

..... (4)

wherein $R^5$ each independently represents an alkyl group which may be substituted with an aryl group or a halogen atom, or an aryl group may be substituted with an alkyl group or a halogen atom, y is an integer of 2 to 8, and X represents at least one selected from groups represented by the formulas (5) to (7) and (17); and
the following general formula (18):

$$X\text{-}Si(OR^{3'}OR^{3})_{(3-m)}R^{4}_{m} \qquad (18)$$

wherein $R^3$, $R^4$, X and m are as defined in the general formula (2), and $R^{3'}$ is an alkylene group which may be substituted with an aryl group, an alkoxysilyl group or a halogen atom.

**2.** The nonaqueous electrolyte solution according to claim 1, wherein the content of at least one compound selected from the group consisting of compounds represented by the general formula (1) to (4) and (18) is 0.01 to 10 parts by weight as the amount per 100 parts by weight of the nonaqueous electrolyte solution.

**3.** The nonaqueous electrolyte solution according to claim 1 or 2, wherein the nonaqueous electrolyte solution contains an acid anhydride.

**4.** The nonaqueous electrolyte solution according to claim 3, wherein the acid anhydride contains at least one cyclic acid anhydride.

**5.** The nonaqueous electrolyte solution according to claim 4, wherein the cyclic acid anhydride is at least one selected from the group consisting of malonic anhydride, succinic anhydride, glutaric anhydride, maleic anhydride, phthalic anhydride, 1,2-cyclohexanedicarboxylic anhydride, 2,3-naphthalenedicarboxylic anhydride and naphthalene-1,4,5,8-tetracarboxylic dianhydride.

**6.** The nonaqueous electrolyte solution according to any one of claims 3 to 5, wherein the content of the acid anhydride is 0.01 to 10 parts by weight as the amount per 100 parts by weight of the nonaqueous electrolyte solution.

**7.** The nonaqueous electrolyte solution according to any one of claims 1 to 6, wherein the nonaqueous solvent contains 5 to 95% by volume of acetonitrile as the amount per total amount of the nonaqueous solvent.

**8.** The nonaqueous electrolyte solution according to any one of claims 1 to 7, wherein the nonaqueous solvent contains a cyclic carbonate.

**9.** The nonaqueous electrolyte solution according to claim 8, wherein the cyclic carbonate contains vinylene carbonate and/or fluoroethylene carbonate.

**10.** A nonaqueous secondary battery comprising a positive electrode having a positive electrode active material layer on one or both sides of a current collector, a negative electrode having a negative electrode active material layer on one or both sides of a current collector, a separator and a nonaqueous electrolyte solution, wherein
the nonaqueous electrolyte solution is according to any one of claims 1 to 9, and
the negative electrode contains at least one compound selected from the group consisting of compounds represented by the following general formula (4A):

[Chemical Formula 7]

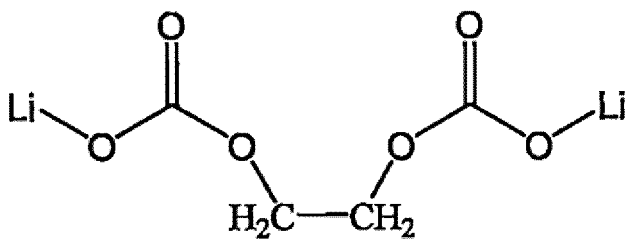

(4 A)

the following general formula (5A):

[Chemical Formula 8]

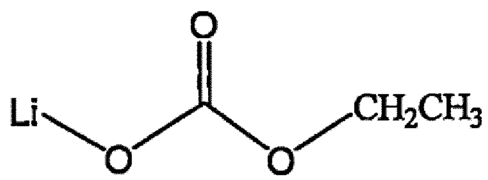

(5 A)

and
the following general formula (6A):

[Chemical Formula 9]

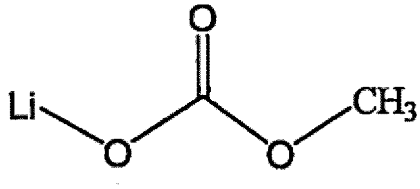

(6 A)

**11.** The nonaqueous secondary battery according to claim 10, wherein the content of at least one compound selected from the group consisting of compounds represented by the general formulas (4A) to (6A) is 0.01 to 100 mg per 1 g of the negative electrode active material.

12. The nonaqueous secondary battery according to claim 10 or 11, wherein at least one compound selected from the group consisting of compounds represented by the general formulas (4A) to (6A) is contained in both the positive electrode and the negative electrode, and the amount of the compound contained in the positive electrode is less than the amount of the compound contained in the negative electrode.

13. A nonaqueous secondary battery comprising a positive electrode having a positive electrode active material layer on one or both sides of a current collector, a negative electrode having a negative electrode active material layer on one or both sides of a current collector, a separator and a nonaqueous electrolyte solution, wherein
a decomposition product of an acid anhydride is contained in both the positive electrode and the negative electrode, and the amount of the decomposition product per unit area of the acid anhydride contained in the positive electrode is less than the amount of the decomposition product per unit area of the acid anhydride contained in the negative electrode.

14. The nonaqueous secondary battery according to claim 13, wherein the decomposition product of the acid anhydride contains at least one compound selected from the group consisting of compounds represented by the following general formula (8):

[Chemical Formula 10]

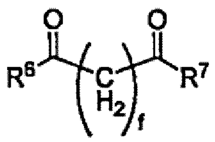

. . . . . (8)

wherein $R^6$ and $R^7$ represent an alkoxy group which may be substituted with a halogen atom, an OH group or an OLi group and f is an integer of 1 to 3;
the following general formula (9):

[Chemical Formula 11]

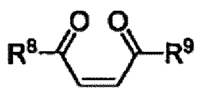

. . . . . (9)

wherein $R^8$ and $R^9$ represent an alkoxy group which may be substituted with a halogen atom, an OH group or an OLi group;
the following general formula (10):

[Chemical Formula 12]

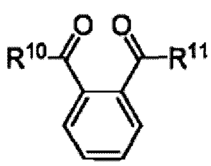

. . . . . (10)

wherein $R^{10}$ and $R^{11}$ represent an alkoxy group which may be substituted with a halogen atom, an OH group or an OLi group;
the following general formula (11):

[Chemical Formula 13]

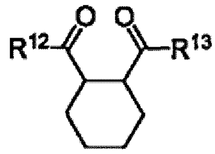

····· (11)

wherein $R^{12}$ and $R^{13}$ represent an alkoxy group which may be substituted with a halogen atom, an OH group or an OLi group;
the following general formula (12):

[Chemical Formula 14]

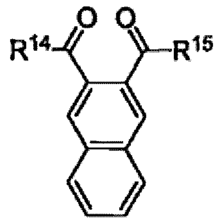

····· (12)

wherein $R^{14}$ and $R^{15}$ represent an alkoxy group which may be substituted with a halogen atom, an OH group or an OLi group; and
the following general formula (13):

[Chemical Formula 15]

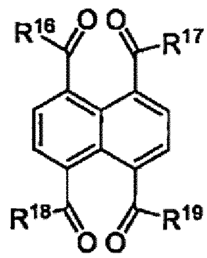

····· (13)

wherein $R^{16}$ to $R^{19}$ represent an alkoxy group which may be substituted with a halogen atom, an OH group or an OLi group.

**15.** The nonaqueous secondary battery according to claim 13 or 14, wherein the positive electrode active material layer contains a positive electrode active material containing at least one transition metal element selected from the group consisting of nickel (Ni), manganese (Mn) and cobalt (Co).

**16.** The nonaqueous secondary battery according to claim 15, wherein the positive electrode active material contains at least one selected from the group consisting of a lithium-containing metal oxide represented by the following general formula (14):

$$Li_pNi_qCo_rMn_sM_tO_u \quad (14)$$

wherein M is at least one metal selected from the group consisting of aluminum (Al), tin (Sn), indium (In), iron (Fe),

vanadium (V), copper (Cu), magnesium (Mg), titanium (Ti), zinc (Zn), molybdenum (Mo), zirconium (Zr), strontium (Sr) and barium (Ba), and p, q, r, s, t and u are within the following ranges: $0 < p < 1.3$, $0 < q < 1.2$, $0 < r < 1.2$, $0 \leq s < 0.5$, $0 \leq t < 0.3$, $0.7 \leq q + r + s + t \leq 1.2$ and $1.8 < u < 2.2$, and p is the value determined by a charge-discharge state of the battery.

**17.** The aqueous secondary battery according to claim 16, wherein a nickel (Ni) content ratio q of the lithium-containing metal oxide represented by the general formula (14) satisfies $0.5 < q < 1.2$.

**18.** The nonaqueous secondary battery according to any one of claims 15 to 17, wherein a surface of the positive electrode active material is coated with a compound containing at least one metal element selected from the group consisting of zirconium (Zr), titanium (Ti), aluminum (Al) and niobium (Nb).

**19.** The nonaqueous secondary battery according to any one of claims 10 to 18, wherein at least one battery member selected from the group consisting of the positive electrode, the negative electrode and the separator contains at least one compound selected from the group consisting of compounds represented by the following general formula (1):

$$R^1\text{-}(S)_n\text{-}R^2 \qquad (1)$$

wherein $R^1$ and $R^2$ represent an alkyl group which may be substituted with an aryl group or an alkoxysilyl group, or aryl group which may be substituted with an alkyl group or an alkoxysilyl group, and n is an integer of 1 to 4;
the following general formula (2):

$$X\text{-}Si(OR^3)_{(3\text{-}m)}R^4{}_m \qquad (2)$$

wherein $R^3$ and $R^4$ represent an alkyl group which may be substituted with an aryl group or an alkoxysilyl group or a halogen atom, or an aryl group which may be substituted with an alkyl group or an alkoxysilyl group or a halogen atom, and X represents at least one selected from the group consisting of groups represented by the following formula (5):

[Chemical Formula 16]

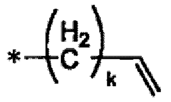
..... (5)

wherein k is an integer of 0 to 8 and * represents a binding site to Si,
the following formula (6):

[Chemical Formula 17]

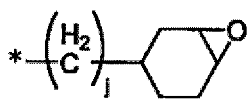
..... (6)

wherein j is an integer of 0 to 8 and * represents a binding site to Si, the following formula (7):

[Chemical Formula 18]

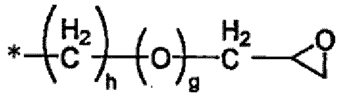
..... (7)

wherein h is an integer of 0 to 8, g is an integer of 0 or 1, and * represents a binding site to Si, and the following formula (17):

[Chemical Formula 19]

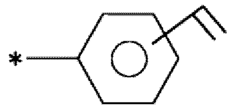

..... (17)

wherein * represents a binding site to Si, and m is an integer of 0 to 2; the following general formula (3):

[Chemical Formula 20]

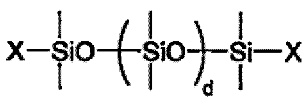

..... (3)

wherein X each independently represents at least one selected from groups represented by the formulas (5) to (7) and (17) and d is an integer of 0 to 10,000;
the following general formula (4):

[Chemical Formula 21]

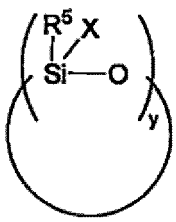

..... (4)

wherein $R^5$ each independently represents an alkyl group which may be substituted with an aryl group or a halogen atom, or an aryl group which may be substituted with an alkyl group or a halogen atom, y is an integer of 2 to 8, and X represents at least one selected from groups represented by the formulas (5) to (7) and (17); and
the following general formula (18):

$$X\text{-}Si(OR^{3'}OR^{3})_{(3-m)}R^{4}_{m} \quad (18)$$

wherein $R^3$, $R^4$, X, and m are as defined in the general formula (2), and $R^{3'}$ is an alkylene group which may be substituted with an aryl group, an alkoxysilyl group or a halogen atom.

FIG. 1

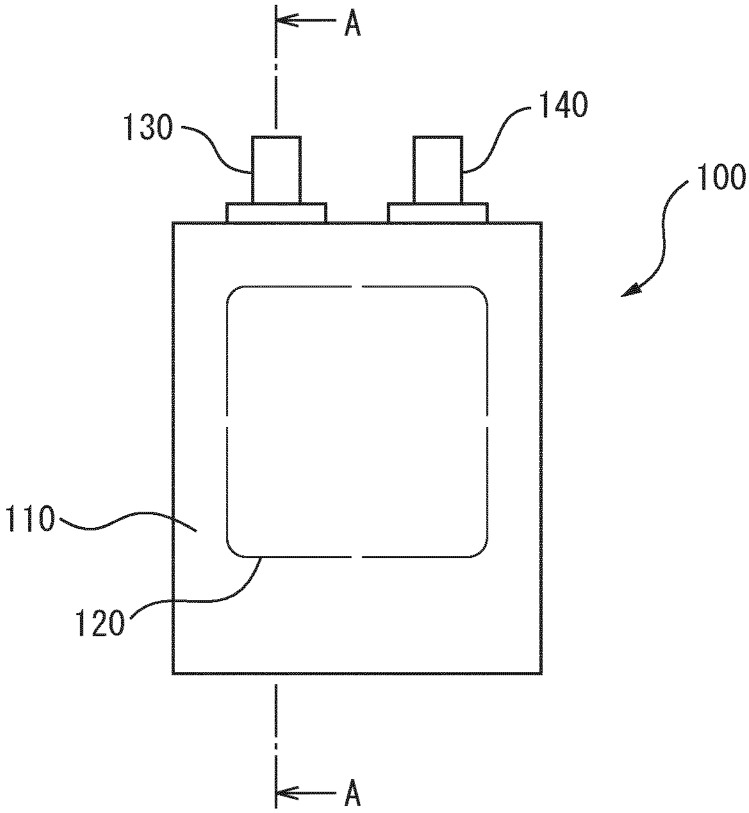


FIG. 2

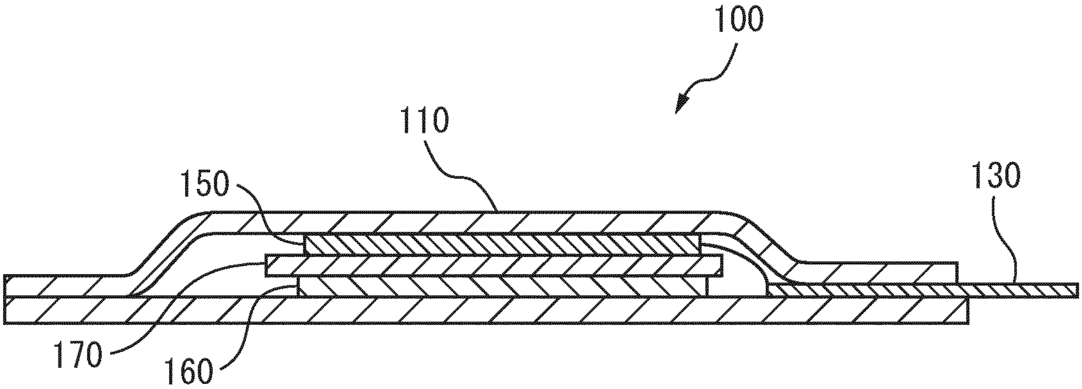

## INTERNATIONAL SEARCH REPORT

International application No.
PCT/JP2019/036212

A. CLASSIFICATION OF SUBJECT MATTER
Int.Cl. H01M10/0567(2010.01)i, H01M2/16(2006.01)i, H01M4/131(2010.01)i, H01M4/36(2006.01)i, H01M4/505(2010.01)i, H01M4/525(2010.01)i, H01M4/62(2006.01)i, H01M10/052(2010.01)i, H01M10/0569(2010.01)i
According to International Patent Classification (IPC) or to both national classification and IPC

B. FIELDS SEARCHED
Minimum documentation searched (classification system followed by classification symbols)
Int.Cl. H01M10/0567, H01M2/16, H01M4/131, H01M4/36, H01M4/505, H01M4/525, H01M4/62, H01M10/052, H01M10/0569

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2016-21289 A(GS YUASA INTERNATIONAL LTD.) 04 February 2016, claim 1 (Family: none) | 1-2, 8-9, 15<br>3-7, 10-12, 19 |
| X<br>Y | WO 2012/029653 A1 (NEC CORP.) 08 March 2012, claim 2 & US 2013/0183576 A1, claim 2 | 1-2, 8-9, 15<br>3-7, 10-12, 19 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 November 2019 (14.11.2019) | 26 November 2019 (26.11.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No. PCT/JP2019/036212

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | WO 2018/003992 A1 (CENTRAL GLASS CO., LTD.) 04 January 2018, claim 14, "1, 3-divinyltetramethyldisiloxane" & CN 109417200 A & KR 10-2019-0025006 A | 1-2, 8-9, 15<br>3-7, 10-12, 19 |
| X<br>Y | JP 2013-175410 A (GS YUASA INTERNATIONAL LTD.) 05 September 2013, claim 1 (Family: none) | 1-2, 8-9, 15<br>3-7, 10-12, 19 |
| X<br>Y | JP 2013-152824 A (SONY CORP.) 08 August 2013, claim 5, paragraph [0049] (Family: none) | 13-14<br>3-7, 10-12, 16-19 |
| X<br>Y | JP 2004-22174 A (YUASA CORPORATION) 22 January 2004, claim 1, paragraph [0015] (Family: none) | 13-14<br>3-7, 10-12, 16-19 |
| Y | JP 2015-72805 A (HITACHI MAXELL, LTD.) 16 April 2015, claim 1, each example (Family: none) | 7, 10-12, 19 |
| Y | WO 2013/062056 A1 (ASAHI KASEI CORPORATION) 02 May 2013, claims 8, 16, 19, each example & US 2014/0255796 A1, claims 8, 16, 19, each example & EP 2772981 A1 | 7, 10-12, 19 |
| Y | WO 2016/039424 A1 (TOSHIBA CORP.) 17 March 2016, paragraph [0014] & US 2017/0179483 A1, paragraph [0017] & EP 3193395 A1 | 10-12, 19 |
| Y | JP 2012-59410 A (NISSAN MOTOR CO., LTD.) 22 March 2012, paragraphs [0037]-[0040] (Family: none) | 10-12, 19 |
| Y | JP 2016-24968 A (SUMITOMO METAL MINING CO., LTD.) 08 February 2016, claim 1 (Family: none) | 16-18 |

Form PCT/ISA/210 (continuation of second sheet) (January 2015)

**INTERNATIONAL SEARCH REPORT**

International application No. PCT/JP2019/036212

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The invention in claim 1 has the special technical feature of containing at least one compound selected from the group consisting of the compounds represented by general formulas (1)-(4) and (18).

Meanwhile, the invention in claims 13-18 has the special technical feature of a size relationship between the amounts of acid anhydride decomposition products of the positive and negative electrodes. The invention in claim 1 and the invention in claims 13-18 do not have identical or corresponding special technical features to each other.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013062056 A
- WO 2012057311 A
- JP 2003303588 A
- JP 2004146104 A
- WO 2017077986 A
- WO 2016159117 A
- JP H081996321312 A


### Non-patent literature cited in the description


- *ACS Energy Lett.,* 2017, vol. 2, 196-223
- *J. Power Sources,* 2013, vol. 233, 121-130
- *J. Phys. Chem. Lett.,* 2017, vol. 8, 4820-4825